(19) Europäisches Patentamt
European Patent Office
Office européen des brevets

(11) **EP 4 711 537 A1**

(12) **EUROPEAN PATENT APPLICATION**
published in accordance with Art. 153(4) EPC

(43) Date of publication:
**18.03.2026 Bulletin 2026/12**

(21) Application number: **24807401.5**

(22) Date of filing: **29.04.2024**

(51) International Patent Classification (IPC):
*E03C 1/266* (2006.01)   *B09B 3/60* (2022.01)
*B09B 3/38* (2022.01)   *B09B 101/70* (2022.01)

(52) Cooperative Patent Classification (CPC):
**B09B 3/38; B09B 3/60; E03C 1/266;** B09B 2101/70

(86) International application number:
**PCT/KR2024/005741**

(87) International publication number:
**WO 2024/237523 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 KR 20230061877**

(71) Applicant: **LG Electronics Inc.**
**Yeongdeungpo-gu**
**Seoul 07336 (KR)**

(72) Inventors:
• **WON, Kwangjae**
  **Seoul 06772 (KR)**
• **LEE, Ayeong**
  **Seoul 06772 (KR)**
• **PARK, Jeongyeon**
  **Seoul 06772 (KR)**

(74) Representative: **Ter Meer Steinmeister & Partner**
**Patentanwälte mbB**
**Nymphenburger Straße 4**
**80335 München (DE)**

(54) **FOOD DISPOSAL APPARATUS**

(57)     An embodiment disclosed herein provides a food disposal apparatus comprising: an inlet cover covering an inlet; an input unit which is seated inside the inlet and includes a cover guide for guiding the inlet cover; a solid-liquid separation unit which receives food from the inlet, separates liquid from the food, and drops the solid food downwards; and a decomposition unit which is disposed below the solid-liquid separation unit and includes a stirring module for stirring and mixing, with microorganisms, the food that is dropped, wherein the solid-liquid separation unit and the decomposition unit start operating when the inlet cover rotates on the cover guide. Therefore, the presence of the cover can be recognized by placing the cover on the corresponding inlet in any direction without any particular attentiveness of the part of the user. In addition, a display unit for communicating the current state is arranged in the inlet and can thus warn a user of a malfunction or notify the user of the current state.

FIG. 13a

## Description

[Technical Field]

An embodiment of the present disclosure relates to a food disposal apparatus, and particularly, to a built-in type food disposal apparatus that may be installed inside a sink.

[Background Art]

In general, food disposal apparatuses are divided into built-in type food disposal apparatuses, which are installed beneath a sink and dispose food waste directly injected from a sink inlet, and standing type food disposal apparatuses which are provided separately from the sink to collect and dispose dehydrated solid food waste.

In the case of the standing type food disposal apparatuses, solid food waste that has undergone dehydration is collected and decomposed into inorganic matter primarily through microbial decomposition, and the decomposed matter is collected and discharged.

Meanwhile, the sink built-in type food disposal apparatus includes a grinder that grinds food waste fed through an inlet and a dehydrator that dehydrates the ground food waste.

In general, the grinding and dehydration processing of food waste is configured to be performed sequentially. Food waste passes through the grinder and then the dehydrator to be loaded into a storage container, and liquid separated from the food waste is discharged through a drain hose. In addition, remaining food waste is collected in a food collection container and disposed when a certain amount accumulates.

Users select and use food disposal apparatuses according to food disposal methods and installation methods, considering various circumstances such as environmental conditions, preferences, etc.

However, in the food disposal apparatuses, the built-in type or the standing type collects food waste for a predetermined period of time for disposal, and the food waste collected during this period decomposes and generates odors. Furthermore, internal movement occurs due to stirring and movement, requiring an operation with an inlet sealed as tightly as possible by an inlet cover.

To this end, research has been conducted on covers for various food disposal apparatuses.

As an example, in International Patent No. WO2012-121539A2, three magnetic bodies are inserted into the inlet cover of the food disposal apparatus, with protrusions formed corresponding to their positions, and locking slots are placed to align with the corresponding protrusions. Therefore, disclosed is a structure in which the cover is locked to the inlet when a user positions the cover at the inlet and rotates the cover.

Accordingly, the presence of the cover is detected by sensing a magnetic body simultaneously with locking, and operation of the food disposal apparatus is performed.

However, in the case of International Patent No. WO2012-121539A2, there is the inconvenience that the user must carefully close the cover to align with the protrusions and slots, and embossing or engraving structures such as protrusions and slots on the cover are highly likely to be contaminated by water and food inside a sink where food waste contamination is prevalent.

Accordingly, International Patent No. WO2016-088939A1 discloses a cover provided to enable opening and closing of an inlet and a safety sensor that detects whether the cover is opened or closed on one side of the inlet that contacts the cover. A structure is provided which stops stirring when the safety sensor detects that the cover is opened while food waste and microorganisms are being stirred inside the disposal apparatus.

Such a safety sensor is presented as a magnetic sensor comprising a magnetic body and a reed switch, wherein the magnetic body is coupled to one side of the cover and the reed switch is installed in an inlet portion corresponding to the magnetic body.

However, International Patent No. WO2016-088939A1 also requires user attention to position the cover such that the magnetic body of the cover and the reed switch of the inlet portion are properly aligned.

Therefore, there is a need for a cover structure for food waste that enables the user to confirm the presence or absence of the cover regardless of a position, without coupling the cover while checking a cover position.

Further, there is a need for a control method that can recognize simple movement of the cover and initiate an operation of the food disposal apparatus without requiring a separate start button.

[Prior Art Document]

[Patent Document]

International Patent No. WO2012-121539A2 (Publication date: September 13, 2012)
International Patent No. WO2016-088939A1 (Publication date: June 9, 2016)

[Disclosure]

[Technical Problem]

An embodiment of the present disclosure provides a built-in type food disposal apparatus integrated with a sink, which may collect and remove compost by performing fermentation without grinding of food waste.

An embodiment of the present disclosure provides a cover structure and a control method in which the presence is recognized by a user by placing the cover on a corresponding inlet without a special attention, and a start command may be recognized by a simple operation.

In addition, an embodiment of the present disclosure provides a cover structure that may minimize contamination by food by forming the cover structure smoothly without an engraving or embossing protruding structure at an inlet of the foot disposal apparatus.

[Technical Solution]

An embodiment of the present disclosure provides a food disposal apparatus including: an inlet part including an inlet cover covering an inlet, and a cover guide seated within the inlet and guiding the inlet cover; a solid-liquid separation part which receives food from the inlet, separates liquid from the food, and drops the solid food downwards; and a decomposition part which is placed below the solid-liquid separation part and includes a stirring module stirring and mixing the food with microorganisms, in which the inlet cover rotates on the cover guide, operations of the solid-liquid separation part and the decomposition part are started.

The inlet may be defined as an entrance of the solid-liquid separation part, and the entrance of the solid-liquid separation part, the cover guide, and the inlet cover may form a concentric circle.

The cover guide may include a side surface that overlaps with an inner surface of the entrance of the solid-liquid separation part, and a seating surface bent inward from a lower portion of the side surface, on which the inlet cover is seated.

The side surface of the cover guide may include an expansion rim having a slope at a portion thereof.

The seating surface of the cover guide may be formed in a C-shape with a portion thereof being opened.

The side surface of the cover guide may include a locker slot that allows a locker arm to penetrate along a curved surface

The inlet cover may be placed on the seating surface of the cover guide and allow liquid from the top to flow downward through an opened region of the seating surface.

The inlet cover may include an upper plate, and a cover body extending downward from the upper plate, and having a narrower diameter than the upper plate and a predetermined thickness.

The inlet cover may be formed in a disc shape.

The inlet cover may have an uneven flat shape on a surface thereof.

The cover body may include a plurality of magnets, and the plurality of magnets may be spaced apart from each other at the same first angle.

At least two sensors for detecting the presence of the plurality of magnets may be placed spaced apart from each other at the entrance of the solid-liquid separation part.

The second angle may be different from the first angle.

The second angle may be larger than the first angle.

When the at least two sensors include a first sensor, and a second sensor spaced apart from the first sensor, an angle at which the first sensor detects a state change of the magnet and an angle at which the first sensor detects the state change of the magnet may be different from each other at the time of rotating the inlet cover.

Detection signals of the first sensor and the second sensor may be periodically read to determines that the inlet cover rotates when the state changes of the first sensor and the second sensor occur within a threshold time.

The inlet cover may include six magnets, and respective magnets may be spaced apart from each other at the first angle of 60 degrees, and the first sensor and the second sensor may be spaced apart from each other at the second angle of 90 degrees.

The cover guide may further include a light emitting guide part that indicates a state of the food disposal apparatus to a user in an inclined region of the expansion rim.

The inlet of the solid-liquid separation part may further include an illumination module for emitting a specific light according to the state of the food disposal apparatus to the light emitting guide part in a region matching the light emitting guide part.

The solid-liquid separation part may further include a locker module that, when it is determined that the operation of the food disposal apparatus starts based on rotation of the inlet cover, pushes a locker arm from the side surface of the inlet through the locker slot to fix the inlet cover.

Another embodiment of the present disclosure provides a food disposal apparatus including: an inlet part including an inlet cover covering an inlet, and a cover guide seated within the inlet and guiding the inlet cover; a solid-liquid separation part which receives food from the inlet, separates liquid from the food, and drops the solid food downwards; a decomposition part which is placed below the solid-liquid separation part and includes a stirring module stirring and mixing the food with microorganisms; a plurality of magnets placed spaced apart from each other in the inlet cover; at least two sensors placed in the solid-liquid separation part and detecting the presence of the plurality of magnets; and a control unit operating at least one of the solid-liquid separation part and the decomposition part based on sensing values input from the sensors according to movement of the inlet cover.

[Advantageous Effects]

Through the technical solution, the food disposal apparatus is easy to post-process and environmentally friendly as food is decomposed by microorganisms.

According to at least one of the embodiments of the present disclosure, in the sink-integrated type food disposal apparatus, food waste can be fermented in a solid state without grinding, thereby preventing discharge of food waste into a drain through grinding, which is environmentally friendly.

According to an embodiment of the present disclosure, a user places the food disposal apparatus at the corresponding inlet without special attention and without regard to a cover orientation, so the presence may be recognized. Further, an indicator is placed at the inlet to inform a current state, enabling warning the user of a malfunction or notify the user of the current state.

Further, a start command may be recognized by simple non-directional rotation of the cover, enabling the food disposal apparatus to be operated through a simple action of rotating the cover at a minimum angle or more after placing the cover at the inlet.

In addition, it is possible to minimize contamination by food by forming the food disposal apparatus smoothly without an engraving or embossing protruding structure at the inlet of the foot disposal apparatus.

[Description of Drawings]

FIG. 1 is a front perspective view of a food disposal apparatus according to an embodiment of the present disclosure.

FIG. 2 is an exploded perspective view of a main body and a lower module of the food disposal apparatus according to an embodiment of the present disclosure.

FIG. 3 is a perspective view illustrating an interior of the food disposal apparatus of FIG. 1.

FIG. 4 is a front view illustrating the interior of the food disposal apparatus of FIG. 1.

FIG. 5 is an exploded perspective view illustrating an inlet part of the food disposal apparatus of FIG. 1.

FIG. 6a is a partial cross-sectional view of the inlet part of FIG. 5 taken along line I-I', and FIG. 6b is a detailed perspective view of a cover part and a cover guide.

FIGS. 7a to 7d are detailed views of a solid-liquid separation part of a first embodiment of the food disposal apparatus of FIG. 1.

FIG. 8 is a perspective view illustrating an interior of the lower module of the food disposal apparatus of FIG. 1.

FIG. 9 is a perspective view illustrating an interior of a transfer part of the lower module of the food disposal apparatus of FIG. 1.

FIGS. 10a and 10b are state diagrams illustrating coupling of the transfer part and a collection part.

FIG. 11 is a schematic configuration diagram illustrating a drainage deodorization module of the food disposal apparatus of FIG. 1.

FIGS. 12a to 12d are flowcharts illustrating an operation of the food disposal apparatus of FIG. 1.

FIGS. 13a and 13b are an exploded perspective view and a top view illustrating fastening of an inlet part and a solid-liquid separation part of FIG. 5.

FIG. 14 is a partial cross-sectional view of the inlet part portion of FIG. 13b taken along line II-II'.

FIG. 15 is a partial cross-sectional view of the inlet part of FIG. 13b taken along line III-III'.

FIG. 16 is an exploded perspective view illustrating a locker module that implements fixing of the inlet part and the solid-liquid separation part of FIG. 5.

FIGS. 17a and 17b are state diagrams illustrating a fixing operation of the inlet part and the solid-liquid separation part by the locker module of FIG. 16.

FIGS. 18a to 18c are state diagrams illustrating proceeding of rotation of an inlet cover according to a first application example.

FIG. 19 is a waveform diagram illustrating detection signals of a first sensor and a second sensor in FIGS. 18a and 18b.

FIG. 20 is a flowchart illustrating a state recognition method for the rotation of the inlet cover.

FIG. 21 is a flowchart illustrating an emergency situation recognition method according to first and second sensor values.

FIGS. 22a and 22b are state diagrams illustrating proceeding of rotation of an inlet cover according to a second application example.

FIG. 23 is a waveform diagram illustrating detection signals of a first sensor and a second sensor in FIGS. 22a and 22b.

FIG. 24 is a flowchart illustrating a state recognition method for the rotation of the inlet cover.

[Best Mode]

The directional expressions such as "front F/rear R/left Le/right Ri/upper U/lower D" mentioned hereinafter are defined as shown in the drawings, but this is merely for the purpose of enabling clear understanding of the embodiment, and it is of course possible to define each direction differently depending on where the reference point is established. The directional expressions such as "front F/rear R/left Le/right Ri/upper U/lower D" mentioned hereinafter are defined as shown in the drawings, but this is merely for the purpose of enabling clear understanding of the embodiment, and it is of course possible to define each direction differently depending on where the reference point is established.

The use of terms with expressions such as "first, second" etc., before the components mentioned hereinafter is merely to avoid confusion of the referenced components, and is unrelated to the order, importance, or hierarchical relationship among the components. For example, an embodiment including only the second component without the first component is also implementable.

In the drawings, the thickness or size of each component has been exaggerated, omitted, or schematically illustrated for convenience and clarity of description. Also, the size and area of each component do not entirely reflect the actual size or area.

Furthermore, the angles and directions mentioned in the process of describing the structure of an embodiment of the present disclosure are based on those depicted in the drawings. In the description of the structure in the present disclosure, when the reference points and positional relationships for angles are not clearly mentioned, reference should be made to the relevant drawings.

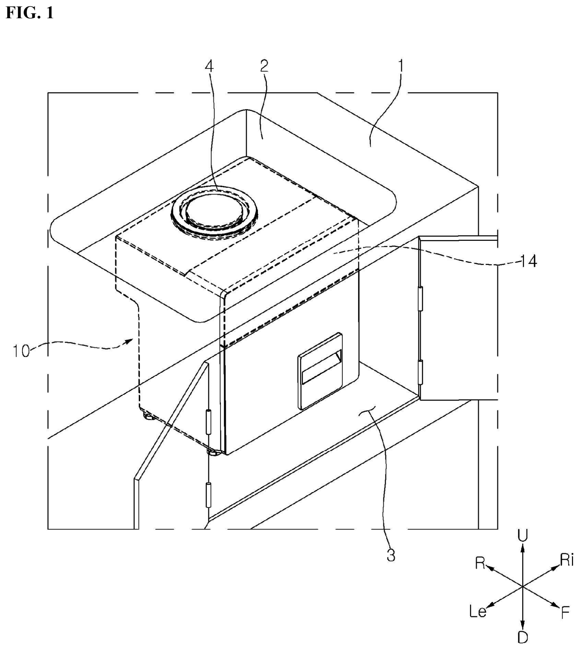

Hereinafter, a food disposal apparatus 10 according to an embodiment of the present disclosure will be described with reference to FIGS. 1 to 4.

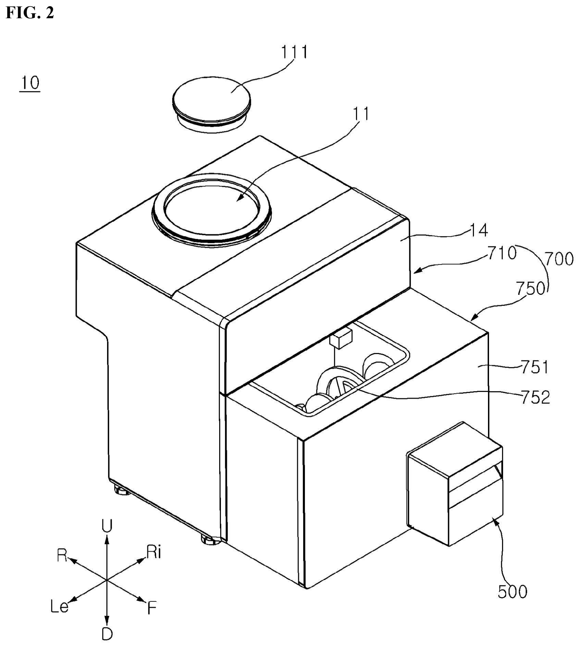

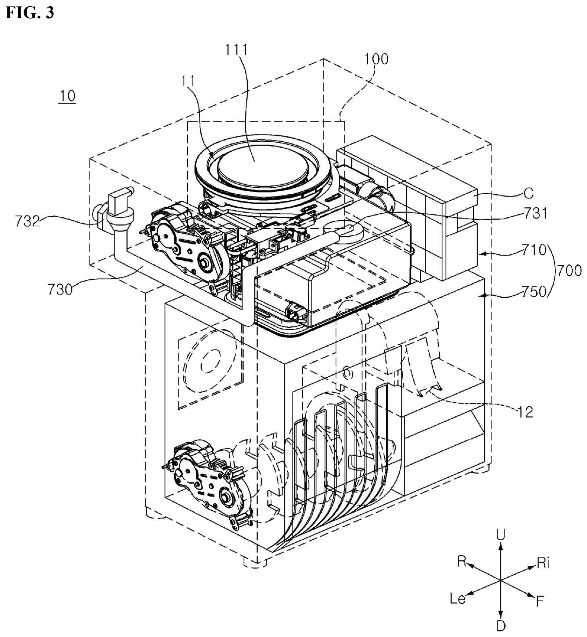

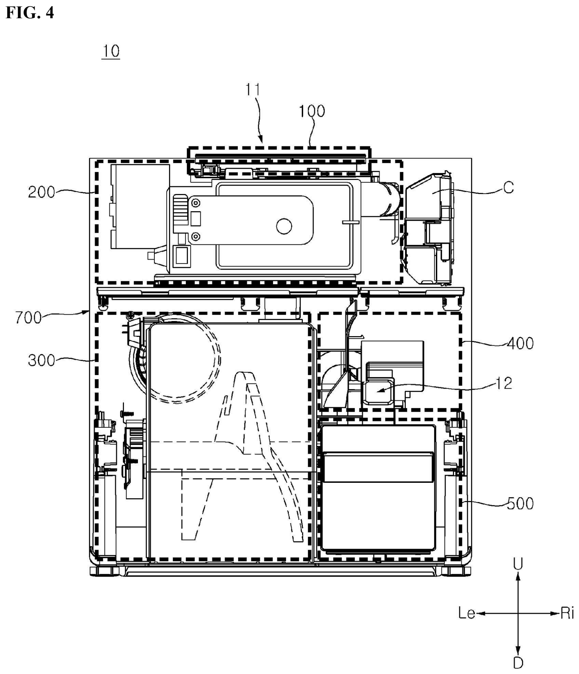

FIG. 1 is a front perspective view of a food disposal apparatus 10 according to an embodiment of the present disclosure, FIG. 2 is an exploded perspective view of a main body 700 and a lower module 750 of the food disposal apparatus 10 according to an embodiment of the present disclosure, FIG. 3 is a perspective view illustrating an interior of the food disposal apparatus 10 of FIG. 1, and FIG. 4 is a front view illustrating the interior of the food disposal apparatus 10 of FIG. 1.

The food disposal apparatus 10 of an embodiment of the present disclosure is a microbial decomposition scheme, and food to be disposed enters an inlet 11 located on a top of the food disposal apparatus 10 and undergoes a decomposition process inside the food disposal apparatus 10. Compost composted from food decomposed by microorganisms may be discharged through an outlet 12 located at a bottom of the food disposal apparatus 10 and collected by a collection part 500, and then discharged to the outside all at once.

The food disposal apparatus 10 is enabled to be provided as an integral type within an interior 3 of a sink 1. When the food disposal apparatus 10 is built into the sink 1, an inlet part 100 of the food disposal apparatus 10 may be configured with a size and a shape corresponding to a drain 4 on a bottom surface of a sink bowl 2. Therefore, when the food disposal apparatus 10 is installed in the sink 1, the inlet part 100 of the food disposal apparatus 10 is coupled to the drain 4 of a legacy sink bowl 2 without a need to provide a separate sink bowl 2 for coupling to conveniently use the food disposal apparatus 10.

The food disposal apparatus 10 of an embodiment of the present disclosure, which is built into the interior 3 of the sink 1 has a top surface placed parallel to the sink bowl 2 of the sink 1, a bottom surface parallel to the top surface and facing a bottom of the sink 1, and front, rear, left, and right side surfaces between the top surface and the bottom surface, and is implemented to have an internal space.

The front surface of the food disposal apparatus 10 is defined as a side facing the user when the user stands in front of the sink 1, the rear surface is defined as the side parallel to the front surface and facing the rear surface of the sink 1, a side surface bent to the left from the front surface is defined as a left surface, and a side surface bent to the right from the front surface is defined as a right surface.

In FIGS. 1 and 2, the top surface and the bottom surface of the food disposal apparatus 10 have different areas from each other, a rear recessed portion 15 is formed according to an area difference between the top surface and the bottom surface, and a distributor (not illustrated) in the interior 3 of the sink 1 may be located in the rear recessed portion 15.

The left surface and the right surface are also formed in angular shapes where at least a portion of a side facing the rear is recessed by the rear recessed portion 15.

Therefore, the food disposal apparatus 10 according to the embodiment has an overall hexahedral shape, but may be partially recessed at a lower rear portion, and is enabled to be variously provided according to a shape of the sink 1. That is, when a top surface inlet part 100 of the food disposal apparatus 10 is enabled to be coupled to the drain 4 of the sink 1, and a drainage/deodorization module 600 of the food disposal apparatus 10 is placed to be coupleable to a drain pipe of the sink 1, the food disposal apparatus 10 is enabled to be modified into any structure as long as the food disposal apparatus 10 has an internal space.

The food disposal apparatus 10 is constituted by an upper module 710 in which the inlet 11 is placed on the top surface of the food disposal apparatus 10, and a solid-liquid separation part 200 connected to the inlet, and separating input food waste into a solid and a liquid, and transfers the solid is mounted, and a lower module 750 placed below the upper module 710.

The upper module 710 may include a display part 14 on the front surface of the food disposal apparatus 10 and is integrated into a main body 700 (entire housing) of the food disposal apparatus 10.

The display part 14 may display information regarding a temperature and a humidity within the decomposition part 300, a composting degree, a remaining charge capacity of the collection part 500, and the like.

The lower module 750 is a functional module for receiving food from the upper module 710 for fermentation and storage, which is integrated as a single module and is separable from the main body 700 in which the upper module 710 is placed.

The lower module 750 may be pulled out from the front surface of the food disposal apparatus 10 in a first direction, i.e., in a front-to-rear direction, and separated from the main body 700. By separating the lower module 750, compost and microorganisms that are decomposed within the decomposition part 300 mounted in the lower module 750 is enabled to be directly collected, and cleaning of an interior of the decomposition part 300 is enabled.

Various techniques are applicable to facilitate easy assembly and disassembly of the lower module 750 from the main body 700. As an example, the lower module 750 is detachable from the main body 700 in a drawer-like manner.

The inlet cover 111 covers the inlet 11 to be openable and closable, and is provided to cover most of the area of the inlet 11 so that odors from the input food do not leak out.

The collection part 500 stores compost which is decomposed food. The collection part 500 implements a sealing structure to prevent odors generated inside the food disposal apparatus 10 from leaking out.

The food disposal apparatus 10 of the embodiment includes a water supply part 730 connected to the water supply pipe formed in the sink 1 and the drainage/deodorization module 600 connected to the drain pipe formed in the sink 1, and liquid discharged by solid-liquid separation of food is immediately discharged, while odors and moisture discharged from each module is guided to be discharged into the drain pipe through the drainage/deodorization module 600. Therefore, the food disposal apparatus 10 has a structure directly connected to the water supply pipe and the drain pipe of the sink 1 and does not have a separate hole for external odor discharge, so that when the food disposal apparatus 10 is operated and the inlet cover 111 covers the inlet 11, the interior has a sealing structure.

The collection part 500 connected to the outlet 12 of the food disposal apparatus 10 is separable from the outlet 12. The separated collection part 500 may be emptied of the contained compost and reassembled to the food disposal apparatus 10. The collection part 500 may be seated in the food disposal apparatus 10.

The inlet cover 111 may be provided in a circular shape so that the inlet cover 111 may rotate at the inlet 11. Specifically, the inlet cover 111 may ensure sealing force between the inlet cover 111 and the inlet 11 merely by being fitted and seated in the inlet 11. Therefore, engagement between the inlet cover 111 and the inlet 11 to an extent of fitting engagement or seating is required, without performing engagement with the inlet 11 through a screw structure or the like.

In addition, when the inlet cover 111 rotates at a predetermined angle or more while seated in place, a sensor detects the rotation to recognize the seating and operation initiation of the inlet cover 111.

That is, rotation of the inlet cover 111 may be used as an operation switch of the food disposal apparatus 10. For example, a sensing structure comprising a magnet and a Hall sensor may be provided in the inlet cover 111 and the inlet part 100 to which the inlet cover 111 is coupled. That is, after fastening the inlet cover 111 to the inlet 11 and rotating the inlet cover 111, the Hall sensor periodically detects the magnet to recognize a rotational operation, and accordingly recognizes operation initiation.

That is, an operation of seating the inlet cover 111 and an operation start command of the food disposal apparatus 10 may be distinguished and recognized. Therefore, the seating operation of the inlet cover 111 for preventing odor and the rotational operation for the operation start command of the food disposal apparatus 10 are distinguished, thereby enabling accurate operation start while minimizing user intervention.

FIGS. 3 and 4 are a perspective view and a front view illustrating the interior of the food disposal apparatus 10 according to the embodiment.

The following description is based on the components according to a food disposal process of the food disposal apparatus 10 according to an embodiment of the present disclosure.

The inlet part 100 is the inlet 11 of the food disposal apparatus 10, which guides food to be input and transfers the food to the solid-liquid separation part 200 at a bottom thereof.

The solid-liquid separation part 200 is provided at the bottom of the inlet part 100 to separate the liquid from the food waste that moves from the inlet part 100. In order for the food to be easily decomposed, it is preferable to have a moisture content at a certain level or lower, and the solid-liquid separation part 200 serves to separate the liquid in an unground state and discharge the liquid to an external sink drain through the drainage/deodorization module 600.

The solid-liquid separation part 200 may receive water from a water supply part connected to an external sink water supply pipe and supply the water to the decomposition part 300 at the bottom thereof. An interior of the decomposition part 300 must maintain a predetermined amount of humidity for a microbial activity, and the humidity may be sprayed from the water supply part 730 of the solid-liquid separation part 200.

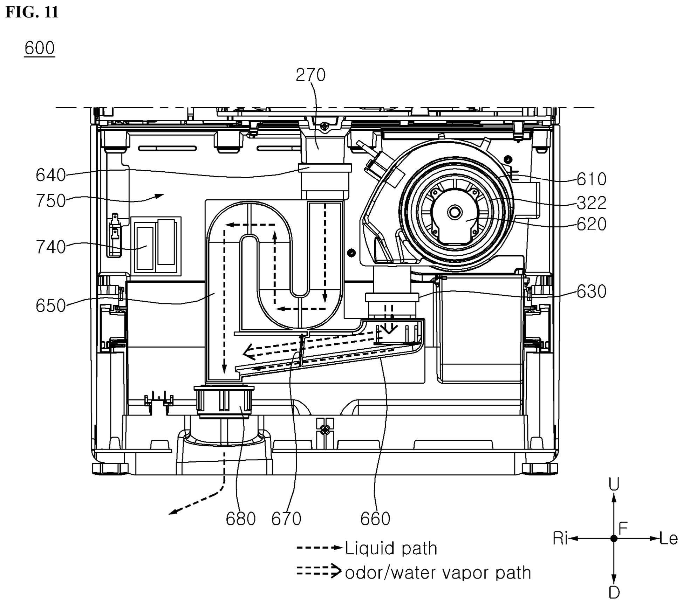

The water supply part 730 may be formed which penetrate an interior from an exterior of a case 201 of the solid-liquid separation part 200, and such a water supply part 730 may have a water supply pipe to be connected to the external water supply pipe. Meanwhile, the internal water supply pipe 730 provided inside the food disposal apparatus 10 connects the solid-liquid separation part 200 and the external sink water supply pipe through a pipe connection portion 732, and the internal drainage/deodorization module 600 connects the solid-liquid separation part 200 and an external drain through a pipe connection portion 680 (see FIG. 11a). The internal drainage/deodorization module 600 is partially branched and connected to perform a deodorization function, and also functions as a deodorization module that discharges odors together with the liquid to the external drain.

The solid-liquid separation part 200 drops only the solid from which the liquid is separated from the food input from the inlet part 100 to the decomposition part 300 at the bottom thereof by linear movement or rotational movement on a horizontal plane.

The decomposition part 300 may decompose solid food through microorganisms. The decomposition part 300 is provided within the lower module 750 below the solid-liquid separation part 200 to receive the food from which the liquid is removed, stir the received food with microorganisms, compost the food, and decompose the food into compost. The food decomposed into the compost is decomposed into a form such as compost with a small and uniform particle size without separate grinding.

Therefore, the compost has a small particle size and a reduced weight to move along a relatively large trajectory by stirring of an stirring member 350 and to be input into a transfer part 400 placed at the top.

The collection part 500 receives food of which decomposition is completed by the decomposition part 300 and preliminarily stores food to be discharged outside the food disposal apparatus 10. The collection part 500 may be placed horizontally with respect to the decomposition part 300. The decomposition part 300 and the collection part 500 may be partitioned by a side wall 360, and the compost from the decomposition part 300 may move to the collection part 500 through a side wall opening formed on the side wall 360.

The transfer part 400 transfers at least a portion of the compost generated by decomposition in the decomposition part 300 to the collection part 500. The transfer part 400 is placed horizontally with respect to the decomposition part 300 and is positioned above the collection part 500 to move food in the decomposition part 300 through an inlet 361 of a side wall 360 and through a top opening of the collection part 500. The transfer part 400 moves the food in the decomposition part 300 to the collection part 500 by mechanical driving.

That is, when light and small particle compost is moved upward by the stirring of the decomposition part 300, the compost is introduced into the transfer part 400 through the inlet 361 of the side wall 360 and discharged through the outlet 12 to the top opening of the collection part 500 by the mechanical driving of the transfer part 400.

The main body 700, which determines an appearance of the food waste processor 10 and a volume of the internal space, houses each module.

Specifically, the inlet part 100 and the solid-liquid separation part 200 are integrated and formed within the housing of the main body 700 forming the appearance of the food disposal apparatus 10 as the upper module 710, and the decomposition part 300, the collection part 500, and the transfer part 400 are mounted within the drawer-type lower module 750 that is physically separable from the housing of the main body 700.

Detailed configurations of individual functional modules are described below with reference to respective drawings.

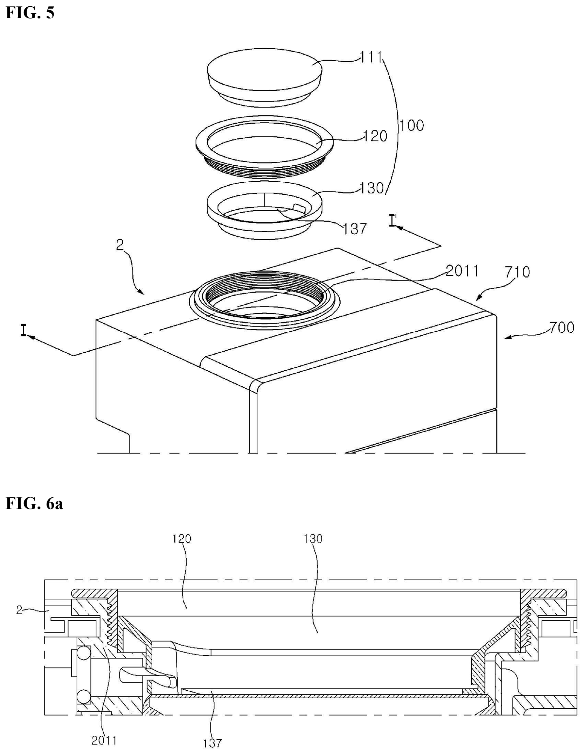

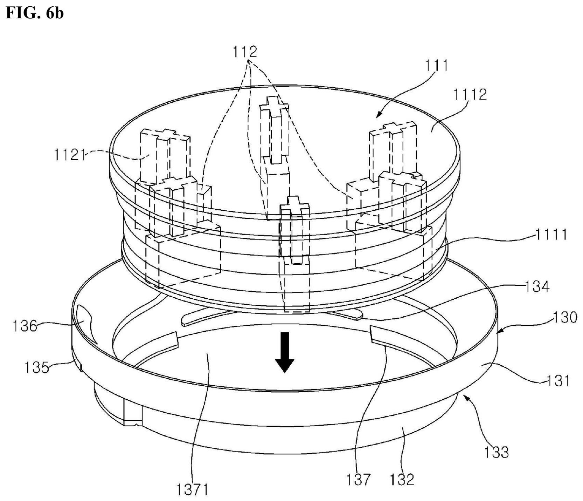

FIG. 5 is an exploded perspective view illustrating an inlet part of the food disposal apparatus 10 of FIG. 1, FIG. 6a is a partial cross-sectional view of the inlet part 100 of FIG. 5 taken along line I-I', and FIG. 6b is a detailed perspective view of an inlet cover and a cover guide.

The food disposal apparatus 10 according to an embodiment of the present disclosure includes an inlet part 100 protruding from the top surface of the main body 700 and aligned with the drain 4 on the bottom surface of the sink bowl 2 of the sink 1.

The inlet part 100 includes a sink lock 120 that is coupled to the inlet of the solid-liquid separation part 200, an inlet cover 111, and a cover guide 130 that is assembled with the inlet cover 111 to detect a presence and operation start of the inlet cover 111.

An inlet 2011 of the solid-liquid separation part 200 is inserted into the drain 4 on the bottom surface of the sink bowl 2 and is coupled to communicate with the top opening of the solid-liquid separation part 200 within the sink 1 to form the input inlet 11 of the food disposal apparatus 10.

The inlet 2011 of the solid-liquid separation part 200 is formed to have a diameter equal to or smaller than a diameter of the drain 4 on the bottom surface of the sink bowl 2, but generally the diameter of the drain 4 is standardized, so the inlet 2011 of the solid-liquid separation part 200 may also be manufactured/distributed/sold according to a specification.

As illustrated in FIGS. 5 and 6a, the inlet 2011 of the solid-liquid separation part 200 is formed with a cylindrical side surface that is inserted into the drain 4 of the sink bowl 2 and extends from the side surface to the top surface of the sink bowl 2 to cover and compensate for a separation space caused by a diameter difference between the drain 4 of the sink 1 and the side surface.

In this case, the inlet 2011 of the solid-liquid separation part 200 has a step formed on the side surface thereof to form a seating surface having a narrower diameter than the top opening, and the seating surface is formed so that the cover guide 130 is seated thereon.

The sink lock 120 is formed on the side surface of the inlet 2011 of the solid-liquid separator 200 and is threaded to a side surface of the inlet 2011 of the solid-liquid separation part 200 so as to completely cover the separation space with the sink bowl 2 of the sink 1 and to be in close contact with the top surface of the sink bowl 2. Therefore, the food disposal apparatus 10 and the sink 1 are coupled within the sink bowl 2 without any separation space by the sink lock 120.

The cover guide 130 is placed above the side surface of the sink lock 120.

The cover guide 130 has a seating surface 137 on which the inlet cover 111 is seated, and guides the seating of the inlet cover 111.

Specifically, referring to FIG. 6b, the cover guide 130 has a cylindrical structure having a smaller diameter than the side surface of the sink lock 120.

The cover guide 130 includes a side surface 132 that overlaps with the side surface of the sink lock 120 within the side surface of the sink lock 120, and a seating surface 137 bent inwardly from a lower portion of the side surface 132, on which the inlet cover 111 is seated.

The seating surface 137 can support an edge of the inlet cover 111. For example, the seating surface 137 may have a ring shape. As another example, the seating surface 137 may have a structure of a plurality of spaced elements on a closed curve surrounding an arbitrary center point.

Specifically, the seating surface 137 may have an arc shape on the closed curve surrounding the center point. The seating surface 137 may be formed in a C-shape with a partially open configuration.

The seating surface 137 may protrude from the side surface 132 toward a center of the cover guide 130.

Further, the cover guide 130 includes an expansion rim 131 having a step 133 so that the cover guide 130 is seated on the seating surface 137 of the inlet of the solid-liquid separation part 200 above the side surface 132.

The expansion rim 131 has an inner surface that is inclined with a predetermined slope from top to bottom, and may be formed such that a diameter of a cross-section decreases downward.

In this case, an outer surface of the expansion rim 131 may be formed vertically along a vertical direction. Therefore, a step 133 is formed between the expansion rim 131 and the side surface 132, and the cover guide 130 is supported as the step 133 extends over the seating surface of the inlet 2011 of the solid-liquid separation part 200.

A locker slot 134 is formed in at least a portion of the side surface 132 of the cover guide 130.

The locker slot 134 is an opening portion for the locker 280 to be introduced into the slot 134 to fix the inlet cover 111 and the cover guide 130.

The locker slot 134 may be formed as a rectangular opening that extends longitudinally along the side surface 132 with a predetermined width, and may include a ridge with an intermediate region inclined upward corresponding to a shape of an arm of the locker 280.

In this case, the seating surface 137 may be removed at the bottom corresponding to a region where the locker slot 134 is formed, but is not limited thereto. That is, when the seating surface 137 is removed, the seating surface 137 may have a C-shape with a portion removed rather than a ring shape.

Meanwhile, a guide part 136 is formed on an inner surface of the expansion rim 131 of the cover guide 130.

The guide part 136 provides a light guide path for conducting and transmitting upward a guidance indication received from a control unit (not illustrated) placed in the solid-liquid separation part 200 at a bottom thereof.

That is, the guide part 136 is formed of a translucent light-conducting material and communicates with the control unit placed adjacent to the solid-liquid separation part 200 therebelow by penetrating the expansion rim 131.

The guide part 136 provides a guidance indication that emits light from the control unit to the user. In this case, the guidance indication may be a current operation state of the food disposal apparatus 10, for example, in-operation, operation completion, an error, etc., and indications of the in-operation, the operation completion, and the error may be briefly displayed by illuminated color, flicker, etc. Therefore, the user may quickly recognize a current state of the food disposal apparatus 10 by intuitively recognizing the illuminated color of the guide part 136 which is set.

Such a guide part 136 is placed on an inclined surface of the expansion rim 131, so that when the user looks at the drain 4 of the sink bowl 2 from the top, the user is capable of immediately perceiving the drain 4 of the sink bowl 2 with the naked eyes.

A feedback magnet 135 may be placed below the guide part 136 of the cover guide 130, and the feedback magnet 135 may interlock with a magnet 112 of the inlet cover 111 to provide resistance during rotation of the inlet cover 111.

In this case, a magnetic force of the feedback magnet 135 may be greater than a magnetic force of the magnet 112 of the inlet cover 111.

The inlet cover 111 flows into the side surface of the sink lock 120 of the inlet part 100 and is inserted to be placed on the seating surface 137 of the cover guide 130.

In this case, the inlet cover 111 is seated within the cover guide 130 without a separate coupling structure such as threading, and is capable of adopting a cover for preventing external escape of food during an operation instruction and an operation of the food disposal apparatus 10.

Specifically, the inlet cover 111 may be formed in a disk shape having a predetermined thickness to be rotatable on the cover guide 130, as illustrated in FIG. 6b.

The inlet cover 111 may be implemented with a cover housing 1111 forming a disk and an upper plate 1112 covering an upper portion of the cover housing 1111.

The cover housing 1111 has an internal space and is enabled to be in a cylindrical shape. In this case, a diameter of the cover housing 1111 may be smaller than a diameter of the upper plate 1112.

Inside the cover housing 1111, a predetermined number of magnets 112 may be placed spaced apart from each other.

The magnets 112, which are magnets having the size magnetic force and the same size, are formed to have the same polarity. Such magnets 112 are placed to have the same spacing distance and are enabled to be formed spaced apart from a center point of the cover housing 1111 by a predetermined distance, for example, at an angle of 360/n. The n is defined as the number of magnets 112.

As an example, when six magnets 112 are placed, the magnets 112 may be placed to have a spacing angle of 60 degrees.

The upper plate 1112 may be finished smoothly and flatly to cover the cover housing 1111 and form a top upper surface of the insertion cover 111.

After the inlet cover 111 is seated on the seating surface 137 of the cover guide 130, the inlet cover may be rotated by a predetermined angle or more to command operation start.

The food disposal apparatus 10 of an embodiment of the present disclosure does not generate rotation for grinding or dehydrating food input through the inlet part 100 and the solid-liquid separation part 200. Therefore, the inlet cover 111 is not required to be completely sealed to the inlet part 100, and only a covering capability equivalent to preventing discharge of malodors that may occur during operation of the food disposal apparatus 10 by covering the drain 4 is required. Therefore, engaging shapes such as a screw structure, etc., are not essentially required.

The control unit may operate at least one of the solid-liquid separation part 200 and the decomposition part 300 according to sensing values input from the sensors 291 and 292 in response to movement of the inlet cover 111.

However, the inlet cover 111 is seated at the inlet 11 and then rotates, and the rotation of the inlet cover 111 is recognized by detection of a Hall sensor mounted in a control unit of the solid-liquid separation part 200 in conjunction with the magnet 112 mounted on the inlet cover 111 by the rotation.

Through such rotation of the inlet cover 111, seating and an operation start command of the inlet cover 111 are recognizable. That is, the rotation of the inlet cover 111 may be used as an operation switch of the food disposal apparatus 10.

That is, while the inlet cover 111 is seated at the inlet 11 and rotates, the Hall sensor periodically detects the magnet 112 to recognize a rotational operation, and accordingly recognizes the operation start command.

That is, the control unit may distinguish and recognize the operation of seating the inlet cover 111 and the operation start command of the food disposal apparatus 10. Therefore, the seating operation of the inlet cover 111 for preventing odor and the rotational operation for the operation start command of the food disposal apparatus 10 are distinguished, thereby enabling accurate operation start while minimizing user intervention.

Hereinafter, the main body 700 and the solid-liquid separation part 200 of the food disposal apparatus 10 will be described.

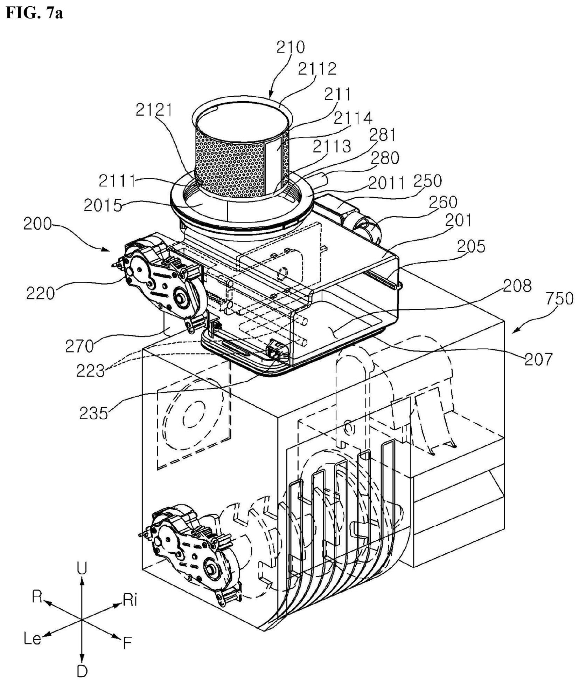

FIGS. 7a to 7d are detailed views of a solid-liquid separation part of a first embodiment of the food disposal apparatus of FIG. 1.

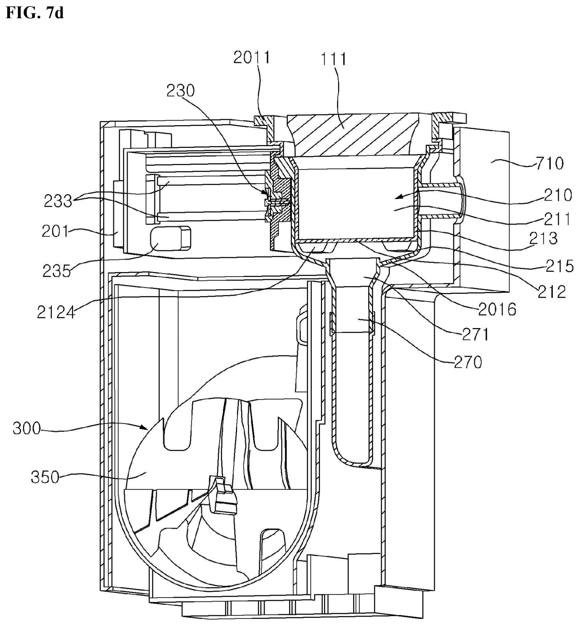

As illustrated in FIGS. 7a and 7d, the solid-liquid separation part 200 is placed within the upper module 710 of the main body 700 of the food disposal apparatus 10 between the inlet part 300 and the decomposition part 300.

The solid-liquid separation part 200 performs a function of filtering a liquid from foot waste introduced into the inlet part 100, i.e., food waste directly introduced from the sink bowl 2 of the sink 1, and transferring only a solid to the decomposition part 300.

The solid-liquid separation part 200 has an inlet 20011 and an outlet 208, and the inlet 2011, and the inlet 2011 is connected to the drain 4 of the sink 1 as described above, and the outlet 208 is placed on a bottom surface of the upper module 710, i.e., a bottom surface of a case 201 of the solid-liquid separation part 200, and communicates with the decomposition part 300.

To this end, the solid-liquid separation part 200 is provided such that at least one region overlaps above the decomposition part 300, and the outlet 208 of the solid-liquid separation part 200 is provided to be located in this overlapping region. As a result, food discharged through the outlet 208 of the solid-liquid separation part 200 falls freely and is transferred to the decomposition part 300.

The inlet 2011 and the outlet 208 of the solid-liquid separation part 200 are not placed in a straight line with respect to a second direction which is a vertical direction.

As an example, the inlet 2011 of the solid-liquid separation part 200 may be positioned biased to a rear from a front and the rear of the food disposal apparatus 10, and the outlet 208 of the solid-liquid separation part 200 may be positioned biased to the front of the food disposal apparatus 10. Therefore, the solid-liquid separation part 200 may horizontally move the introduced food from the rear to the front to be transferred to the decomposition part 300.

The solid-liquid separation part 200 includes the case 201 defining an interior of the upper module 710.

The case 201 of the solid-liquid separation part 200 has a shape in which a length and a depth are greater than a height, and the height is greater than a height of a filter part 210 that primarily receives the input food, the inlet 2011 is provided on a top surface of the case 201, and the outlet 208 is provided on a bottom surface thereof.

In this case, the case 201 may form a hexahedron, and forming the hexahedron means not only having an exact hexahedral shape, but also having a cross-section with a rectangular shape in a partial portion.

The food from the inlet part 100 is transferred to the inlet 2011 of the solid-liquid separation part 200, and the food that has passed through the solid-liquid separation part 200 moves horizontally and is transferred to the decomposition part 300 through the outlet 208 of the solid-liquid separation part 200. The outlet 208 of the solid-liquid separation part 200 is in communication with the inlet of the decomposition part 300 and an entrance 751 of the lower module 750, and may have a matching shape with the entrance 751 of the lower module 750.

An internal space of the solid-liquid separation part 200 defined by the case 201 may be divided into a solid-liquid separation space A and a transfer space B.

The solid-liquid separation space A may be a region located at the rear within the case 201, and is a space between the inlet 2011 and the drain hole 270 that accommodates the filter part 210.

The filter part 210 may include a cylindrical side surface 211 and a bottom surface 212, and the side surface 211 includes a filter surface forming a main area of the side surface, an upper rim 2112 extending upwardly from the filter surface, and a lower rim 2113 of the side surface.

The side surface 211 of the filter part 210 is mainly cylindrical and may be implemented as a filter having holes of a predetermined size formed therein, i.e., a strainer, and a liquid flows out through the side surface 211 and is injected into a drain hole connection portion 271 along an inclined surface of a bottom surface 2016 of the solid-liquid separation space A.

The upper rim 2112 is formed as an inclined surface such that a diameter increases upward, while the lower rim 2113 may be formed to extend from the side surface 211 and function as a border.

In this case, the lower rim 2113 may include a fixing protrusion 2111 that protrudes form a portion of the lower rim 2113, and is fixed to the bottom surface of the solid-liquid separation space A, i.e., the bottom surface 212 of the filter part 210.

The fixing protrusion 2111 may be formed as two continuous fixing protrusions 2111, but is not limited thereto.

Further, the lower rim 2113 may further include, separately from the continuous fixing protrusions 2111, at least one side surface fixing protrusion that side-fixes the bottom surface 212 of the filter part 210.

The filter part 210 is formed such that the side surface 211 and the bottom surface 212 are separable, and the bottom surface 212 is formed in a closed structure with no hole formed therein.

In this case, the bottom surface 212 has a guide protrusion 2121 that is bent upward and guides the side surface 211 of the filter part 210 at a portion of a border thereof, and a fixing hole corresponding to the fixing protrusion 2111 is formed at a portion between the guide protrusion 2121 and the bottom surface 212.

The continuous fixing protrusion 2111 of the side surface 211 and the continuous fixing hole of the bottom surface 212 are fitted to each other and the filter part 210 is assembled, and in this case, an upper portion of an end of the guide protrusion 2121 protrudes in an end direction and is seated on a side fixing protrusion of the filter part 210, so that when the side surface 211 and the bottom surface 212 of the filter part 210 are slidingly assembled to each other, radial coupling by the continuous fixing protrusion 2111 and the fixing hole and circumferential coupling between the side fixing protrusion and the upper portion of the end of the guide protrusion 2121 are simultaneously achieved to provide strong physical coupling.

The filter part 210 is separated from or coupled to the case 201 of the solid-liquid separation space A in a state where the side surface 211 and the bottom surface 212 are coupled to each other. In this case, the bottom surface 212 is coupled with the case 201 and a portion of the guide protrusion 2121, specifically a region where the guide protrusion 2121 extends outward from a circumference and a lower portion of the side surface 2015 of the case 201, so the bottom surface 212 is enabled to be separated only by physical pressing.

In addition, the bottom surface 212 includes a plurality of support rims 2124 on a back surface thereof.

The plurality of support rims 2124 may serve as supports to maintain the filter part 210 in a horizontal position when the bottom surface 212 of the filter part 210 is seated, corresponding to the inclined surface of the case bottom surface 2016.

The plurality of support rims 2124 may be placed in a radial pattern spaced apart to have equal angles with respect to a center of the back surface of the bottom surface 212, and at least three support rims 2124 are enabled to be implemented.

The plurality of support rims 2124 may maintain the filter part 210 horizontally relative to the inclined surface of the case bottom surface 2016, and since a separation space is formed between the back surface of the filter part 210 and the case bottom surface 2016 by a height of the support rim 2124, the liquid from the food waste may flow into the separation space.

When the filter part 210 is placed in the solid-liquid separation space A, a separation distance is formed between the side surface 211 of the filter part 210 and the case side surface 2015 as illustrated in FIG. 7d, and only a liquid is separated from the food waste through perforations in the side surface 211 of the filter part 210 and flows into the case 201 through a space created by the separation distance.

When the bottom surface 212 of the filter part 210 is positioned in the solid-liquid separation space A, The liquid flowing into the case 201 flows to the case bottom surface 2016 through the separation space 2017 between the case side surface 2015 and the bottom surface 212 of the filter part 210 formed by the extended region of the guide protrusion 2121, and is introduced into the discharge hole connection portion 271.

When the bottom surface 212 of the filter part 210 is not integrated with the bottom surface of the case 201, but is coupled in a separable structure when pressed, allowing separation from the case 201 for washing and drying as needed. Further, by separating the bottom surface 212, washing is possible to prevent bacterial growth on the inclined surface that guides liquid flow to the bottom surface of the case 201, namely the discharge hole 270 connected to the drain 4 of the sink 1.

The filter part 210 is enabled to be removed externally by the user lifting the filter part 210 up from the inlet 11 of the inlet part 100. This has a similar structure to the conventional drain strainer 4 of the sink 1, and by removing the filter part 210 externally for washing and drying, individual management of a space in contact with food is possible.

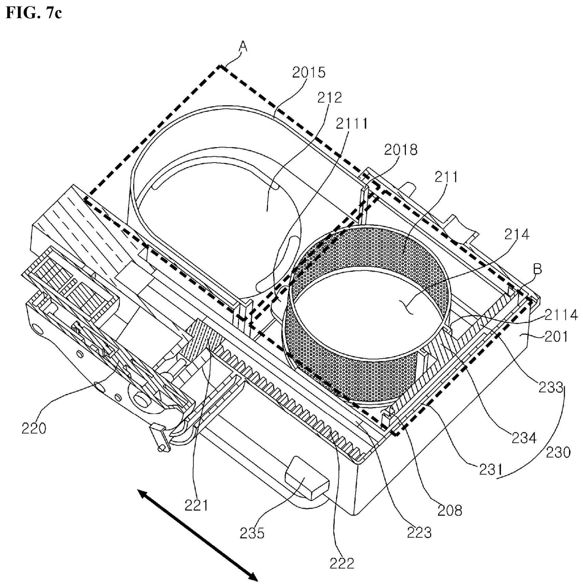

The case 201 includes a side wall 2011 surrounding the filter part 210, and the side wall 2011 may be formed to have a curved surface in a region corresponding to the filter part 210 as illustrated in FIG. 7c.

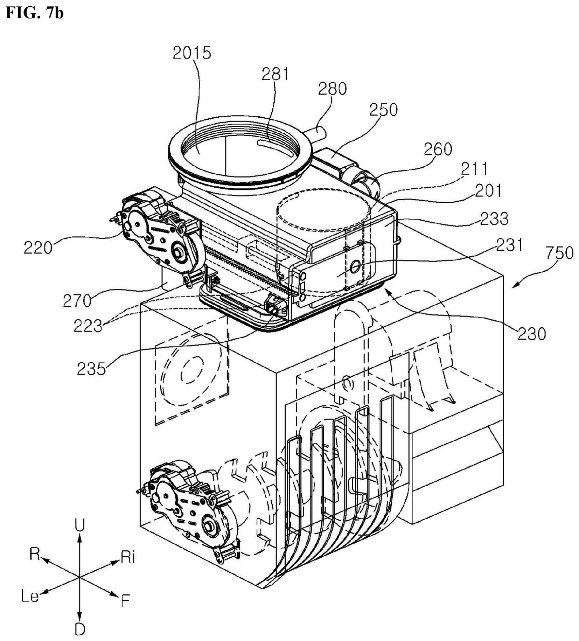

A transfer space B is formed in front of the solid-liquid separation space A as illustrated in FIG. 7b.

The transfer space B is mainly an empty space, which may have the filter part 210 placed therein by movement of the filter part 210 by the transfer part 400 or may be empty due to retraction of the filter part 210.

The transfer space B has an opened bottom, and the opened bottom serves as an outlet 208 that communicates with the inlet of the decomposition part 300.

The case 201 of the solid-liquid separation part 200 surrounding the transfer space B may have a bent angular shape, and a transfer cover for sealing the front of the case 201 may be separately placed, and when the transfer cover for sealing the front is separately provided and coupled, opening and closing for cleaning and repairing are possible.

The solid-liquid separation part 200 includes, on one side surface of the case 201, a transfer module for moving the filter part 210 between the transfer space B and the solid-liquid separation space A in the horizontal plane.

The transfer module may include a transfer motor 220, a pinion 221 connected to a shaft of the transfer motor 220, and a linear rack 222 which moves forward and backward by the pinion 221.

In addition, the transfer module may further include a guide bar 223 for moving the linear rack 222 and a transfer body 230 that is bent from the linear rack 222 and has a face structure toward the front.

The motor 220 rotates the pinion 221 in one direction in order to move the filter part 210 horizontally from the rear to the front from the solid-liquid separation space A to the transfer space B. Further, the motor may rotate the pinion 221 in an opposite direction if necessary to return the filter body 210 from the transfer space B to the solid-liquid separation space A.

Specifically, the transfer motor 220 may be rotated when the operation start is recognized by rotation of the inlet cover 111 after the food is input into the filter body 210. Alternatively, the transfer motor 220 may be operated by receiving a start signal from the user, and such a start signal from the user is enabled to be received from a user terminal in which an application capable of interlocking with the food disposal apparatus 10 is installed. Rotation driving of the transfer motor 220 may be controlled by the control unit.

The transfer motor 220 may be placed outside the case 201, e.g., outside the side surface of the case 201, but is limited thereto, and may also be placed inside the case 201. When the transfer motor 220 is placed outside the case 201, the shaft of the transfer motor 220 may be connected to the pinion 221 through the side wall of the case 201. The pinion 221 engages with sawteeth of the linear rack to linearly move the linear rack 222 in the forward or backward direction by the shaft of the motor.

In this case, the linear rack 222 may further include a guide bar 223 for carrying out a linear movement in the forward or backward direction along the horizontal plane.

The transfer module includes an extension surface 2221 extending in a vertical (second direction) perpendicular to a longitudinal direction (first direction) of the linear rack 222, and the extension surface 2221 extends in the longitudinal direction like the linear rack 222 and is formed to integrate with the linear rack 222.

At least one holder 2222 for holding the guide bar 223 protrudes at an upper portion and a lower portion of the extension surface 2221. The at least one holder 2222 may be formed in a cylindrical structure penetrated by the guide bar 223 or in a semicircular shape, and when the at least one holder 2222 has the semicircular shape, the at least one holder 2222 is enabled to be placed to be opened in opposite directions to each other. Accordingly, the extension surface 2221 may move linearly without being shaken along the guide bar 223, which is installed to pass a plurality of semicircular holders 2222 at the same time.

When a plurality of guide bars 223 are placed, the holders 2222 may be provided at the upper and lower portions of the extension surface 2221 respectively, and the guide bars 223 are coupled to the holders 2222 at the upper and lower portions respectively, so that the linear rack 222 is enabled to move in a more horizontal and unshaken state.

The guide bar 223 may be, but is not limited thereto, an STS guide having one end, namely a rear end, fixed to the case 201 while maintaining a free front end. Alternatively, the linear rack 222 is enabled to move linearly while controlling horizontality by calculating angles in real time using a horizontal sensor. In this case, a case side surface facing the linear rack 222 may further include a touch sensor 235 that detects a position of a protrusion at a lower portion of the linear rack 222.

In this case, the touch sensor 235 is placed at a position that limits a displacement according to movement of the linear rack 222, and when touch of the protrusion is detected by the touch sensor 235, the control unit C may stop driving of the motor 220. The touch sensor 235 may be placed at both end points of the displacement of the linear rack 222.

The linear rack 222 is placed inside the side wall of the case 201 and moves linearly in the forward or backward direction according to rotation of the pinion 221, and a planar transfer body 230 which is bent from affront border of the linear rack 222 is placed at the front.

The transfer body 230 is a coupling member for coupling with the filter part 210 to move the filter part 210 together during linear movement of the linear rack 222.

The transfer body 230 forms a cover by itself, and the transfer body 230 is enabled to be formed to have the same area and shape as the cross-section of the case 201 perpendicular to a moving direction so as to divide the case 201 of the solid-liquid separation part 200 into front and rear portions.

Accordingly, a rear of the transfer body 230, which is a region where the food is present, and a front of the transfer body 230, which is a region where the food is not present, are separated from each other and sealed.

Such sealing force of the transfer body 230 is enabled to be implemented by a sealing portion 2332 surrounding the border of the transfer body 230.

In addition, the sealing force of the transfer body 230 may prevent liquid from penetrating the front of the transfer body 230 and flowing into the decomposition part 300 during solid-liquid separation of food without a separate cover.

The transfer body 230 may have two bodies that are separably coupled structures, but is not limited thereto and may be formed as one body.

The transfer body 230 is slidably coupled to a fixing portion 2114 formed on the side surface of the filter part 210 facing the transfer space B as illustrated in FIG. 7b, and horizontally moves on the side surface of the filter portion 210 to the transfer space B according to movement of the linear rack 222.

During horizontal movement, only the side surface 211 of the filter part 210 moves while the bottom surface 212 remains in the solid-liquid separation space A, so that only the solids of the solid-liquid separated food retained in the filter part 210 moves to the transfer space B and falls through the lower outlet 208 to the decomposition part 300.

More specifically, since the transfer of the transfer module proceeds with force applied only to one side surface of the transfer body 230, i.e., the linear rack 222 is formed only on one side surface to horizontally move the entire transfer body 230, a separation space may occur at a left end portion or a right end portion of the transfer body 230 in some cases.

That is, at the right end portion which is a free end where the linear rack 222 is not connected, the side surface of the case 201 and the transfer body 230 become unsealed and separated from each other.

In order to compensate for such force imbalance, the transfer body 230 is formed as two bodies with the elastic body applied to the connection between the first body 235 and the second body 233 for compensation.

When a thrust force applied to one side of the first body 235 is deflected or deformed, a greater load from the filter part 210 is applied to one side of the second body 233. In this case, a moment is generated in the elastic body at the central portion, which causes a reaction force to be generated on an opposite side, resulting in engagement with a side border of the case 201 at an opposite right end portion.

In this case, a sealing portion 2332 may be formed at the border of the second body 233 to cushion engagement with the border of the case 201, and the border of the second body 233 may be cushioned by the sealing portion 2322 and may engage with the border of the case 201.

Even when the transfer body 230 is in a stationary state in which the transfer body 230 does not transfer the filter part 210 and remains in the solid-liquid separation space A, the border sealing portion 2332 of the transfer body 230 may have a double sealing structure with a sealing member 2018 at the border of the case 201.

That is, in a boundary region between the solid-liquid separation space A and the transfer space B, the side wall of the case 201 of the solid-liquid separation part 200 may further include a case sealing member 2018 that engages with the sealing portion 2332 of the transfer body 230.

By such a double sealing structure, the solid-liquid separation space is be sealed by the transfer body 230 during solid-liquid separation of food to prevent liquid from penetrating the decomposition part 300.

The motor 220 may be provided on the side surface of the case 201 of the solid-liquid separation part 200 where there is sufficient space.

The solid-liquid separation part 200 has a sealed structure through the case 201, and is configured to have a predetermined level of sealing force by closing the inlet cover 111 of the upper inlet 2011.

Therefore, except for the hole of the pinion 221 hole of the motor 220 and the drainage/deodorization module 600 connected to the drain hole of the sink 1 and the outlet 208 connected to the decomposition part 300, the solid-liquid separation part 200 is sealed by the case 201.

Meanwhile, the solid-liquid separation part 200 further includes a separate upper deodorization module 250 for absorbing and discharging odors and water vapor inside the case 201 at an exterior of the case 201.

The upper deodorization module 250 includes a deodorization pipe 260 connected to a deodorization hole 261 in a side wall of the transfer space B, and is designed so that one side of the deodorization pipe 260 is connected to the deodorization hole 261, and the other side is connected to a leakage hole in a side wall of the solid-liquid separation space A, and odors are discharged to the decomposition part 300 where negative pressure is established through the deodorization pipe 260. The upper deodorization module 250 is designed such that the leakage hole is positioned lower than the deodorization hole to prevent excessive water flow from the solid-liquid separation part 200 through the leakage hole, and is operable such that a valve (not illustrated) between the leakage hole and the deodorization hole closes when water rises.

Meanwhile, the solid-liquid separation part 200 may further include a nozzle module 731 connected to the water supply pipe of the sink 1 to supply predetermined humidity to the decomposition part 300.

When the solid-liquid separation part 200 includes the nozzle module 731, the nozzle module 731 may penetrate the case 201 above the transfer space B and may be connected to the water supply connection pipe 730. Accordingly, the water supply connection pipe 730 extends from the water supply pipe to the nozzle 731 at the upper portion of the case 201, and the nozzle module 731 penetrates the upper portion of the case 201 to supply water from the upper portion of the transfer space B toward the outlet 208.

Such a nozzle module 731 is controlled by the control unit, and when the humidity is lower than a predetermined value as detected by the humidity sensor in the decomposition part 300, the nozzle module 731 is turned on to spray a predetermined amount of water. However, when the decomposition part 300 functions as a drying part that does not contain microorganisms, the nozzle module 731 may be omitted.

In addition, one side of the solid-liquid separation part 200 may further include a locker 280 for fixing the inlet cover 111 by penetrating the cover guide 130.

The locker 280 is controlled by the control unit as described above, and when the side surface of the filter part 210 is coupled to the bottom surface of the filter part 210 within the solid-liquid separation space A, the locker detects the coupling, and when the cover guide 130 is seated on the side surface of the filter part 210, detects the seating of the cover guide 130, and when the inlet cover 111 is seated on the cover guide 130, detects the seating of the inlet cover 111 and then moves horizontally toward the inlet cover 111. The locker 280 includes a fixing hand 281 that is branched to fix one side surface of the inlet cover 111, and the fixing hand 281 passes through a locker slit 134 of the cover guide 130 to grip and fix the side surface of the inlet cover 111.

By such fixation of the locker 280, when the filter part 210 moves horizontally due to movement of the transfer body 230 below the inlet cover 111, detachment of the inlet cover 111 caused by shaking of food within the filter part 210 may be prevented.

Therefore, even when there is internal vibration, the inlet cover 111 maintains a firmly sealed state, thereby preventing leakage of odor to the outside.

As such, since the inlet 2011 and the outlet 208 of the solid-liquid separation part 200 of the present disclosure are not positioned in the straight line in the vertical direction, the solid-liquid separation part 200 performs filtering of solids and liquids upon input of the food, while only the filtered solids move horizontally and fall into the lower decomposition part 300 to be introduced.

Various modified examples may exist for the basic module and operation of such solid-liquid separation part 200.

In addition, the positions of the motor 220, the locker 280, and the upper deodorization module 250 are merely one example of the solid-liquid separation part 200 of the first embodiment, and various modified examples are possible.

The structure is greatly simplified by such a solid-liquid separation part 200 that horizontally moves only a portion of the filter part 210, for example, only the side surface 211, from the rear to the front, and isolation of the decomposition part 300 is possible.

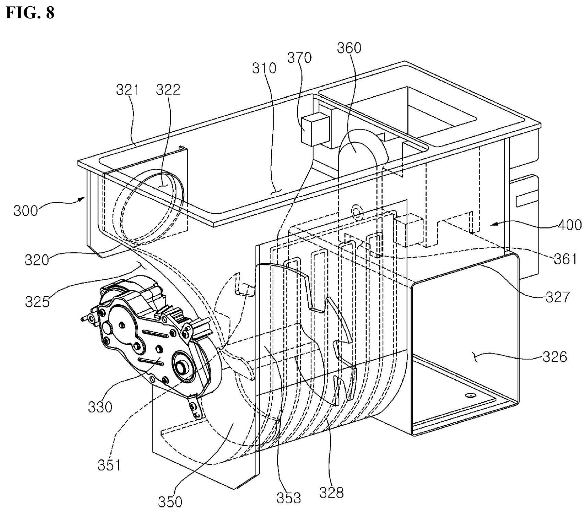

Hereinafter, the detachable lower module 750 of an embodiment of the present disclosure will be described with reference to FIGS. 8 to 11.

The lower module 750 that accommodates all of the decomposition part 300, the transfer part 400, and the collection part 500 is packaged as an individual module separable from the main body 700. The lower module 750 accommodates the internal case 320 of each module within the lower case 751, so that each functional module has a dual case structure.

The case 751 of the lower module 750 may be implemented with the same material as the main body 700 as illustrated in FIGS. 1 and 2, and is formed in a rectangular parallelepiped shape to be insertable into the main body 700.

FIG. 8 is a perspective view illustrating an interior of the lower module 750 of the food disposal apparatus 10 of FIG. 1.

The internal case 320 may define the positions of the decomposition part 300, the transfer part 400, and the collection part 500 and may be provided as a single injection-molding form.

In this case, the transfer part 400 and the collection part 500 may have individual cases placed within the internal case 320, but for the decomposition part 300, the internal case 320 itself may define the space of the decomposition part 300.

That is, the decomposition part 300 is defined as a space for stirring microorganisms and food in an accommodation state. The decomposition part 300 is a space 310 on one side of the internal case 320 that remains mostly empty and occupies 1/2 to 2/3 of a volume of the lower module 750.

The decomposition part 300 may be placed biased to a lower left side on the front surface of the food disposal apparatus 10, and the collection part 500 and the transfer part 400 are positioned overlapping toward the lower right side.

Accordingly, the space 310 of the decomposition part 300 maintains a deep concave shape so as to occupy an entire overlapping length of the collection part 500 and the transfer part 400, and the internal case 320 has a partition wall 360 positioned to separate the collection part 500 and the transfer part 400 from the decomposition part 300.

The decomposition part 300 within the lower module 750 stirs solid food from which liquid is removed, which is delivered to the decomposition part 300 with microorganisms. The stirring of the food and the microorganisms increases decomposition efficiency. A stirring shaft 351 rotates within the decomposition part 300, and a stirring blade 352 is connected to the stirring shaft 351 and rotates together with the stirring shaft 351. The stirring blade 352 may be of a screw type that spirally surrounds the stirring shaft 351 as an axis.

The stirring shaft 351 may be a horizontal rotary shaft which is placed at a lower portion of the decomposition part 300 and extends across left and right directions, and the stirring blade 352 may be branched in a radial direction perpendicular to the stirring shaft 351. The stirring member 350 may be formed as an integral screw type and may protrude at different heights with respect to the stirring shaft 351.

Therefore, the stirring blade 352 is formed such that when a portion protruding farthest from the stirring shaft 351 is defined as a peak, another peak is positioned on an opposite side at 180 degrees, and a height may be formed to decrease between the peaks, but is not limited thereto and may be formed as a screw type having the same length.

Further, the stirring blade 352 includes a concave portion at least in part, and the concave portion is irregularly placed to generate turbulence for smoothly mixing small particle compost produced by decomposition.

The internal case 320 of the decomposition part 300 may be formed such that the lower left side is concavely recessed to have a structure in which a cross-sectional area narrows toward the bottom. In particular, the lower portion that is concavely recessed in the internal case 320 of the decomposition part 300 may be formed such that the bottom surface has a curved surface to prevent food or debris from remaining at corners.

In addition, the bottom surface having the curved surface is formed with the curved surface following a trajectory of the stirring member 350, so that a centrifugal force generated by rotation of the stirring member 350 uniformly affects each space in the lower portion, thereby enabling uniform stirring of food and microorganisms in the lower portion.

One side of the agitation shaft 351 having a horizontal rotation axis in a first direction that is a left-right direction is rotatably fixed to one side wall of the decomposition part 300, and the other side may be rotatably fixed to the other side wall facing the one side wall.

The stirring shaft 351 may receive driving force from the motor 330 provided in the food disposal apparatus 10, and the motor 330 is placed outside a left wall and is positioned in a space 352 between the case 751 of the lower module 750 and the internal case 320 by a concave space 352 in a lower region of the case 320. The driving force of the motor 330 may be transmitted through a rotary shaft 331 which interlocks with the stirring shaft 351.

The decomposition part 300 may be provided with a heating means 328 for heating an internal space. The heating means 328 may be, for example, a heating wire heater. The heating means 328 may be provided on an outer surface of the case 320 of the decomposition part 300 so that heat may be indirectly transmitted to the internal space of the decomposition part 300 through the case 320 of the decomposition part 300. The case 320 of the decomposition part 300 includes a metallic plate 1112 having high thermal conductivity to enable efficient heat transmission. To this end, the case 320 of the decomposition part 300 may have some surfaces made of different materials of metal and non-metal as needed.

The internal space 310 of the decomposition part 300 is heated so that microorganisms may reach an appropriate temperature for decomposing food, and also allows sufficient moisture of the food to be evaporated or vaporized to facilitate disposal.

When the upper portion of the decomposition part 300 is opened, the opened upper portion of the decomposition part 300 is aligned with the outlet 208 of the case 201 of the solid-liquid separation part 200.

In this case, the upper portion of the decomposition part 300 may be larger than the outlet 208 of the solid-liquid separation part 200. Since the lower module 750 may be packaged in a separate case 751 and may be independently separated, a user's hand may enter the internal space 310 through an opening of the upper portion of the decomposition part 300. Therefore, cleaning of the internal space 310 of the decomposition part 300, removal of stuck or adhered food, etc., may be facilitated, and if foreign matters (for example, spoons, chopsticks, bottle caps, etc.,) are introduced into the lower space 310, the foreign matters may be simply removed.

The decomposition part 300 is formed with a deodorization port 322 for connection with the rear drainage/deodorization module 600. A rear surface of the case 320 of the decomposition part 300 may be provided with the deodorization port 322 that may be aligned with a deodorization fan placed in the main body 700 at an upper portion.

The decomposition part 300 does not have a separate drainage structure and decomposes the dehydrated solid food and discharges only vaporized odors or water vapor through deodorization. Therefore, the decomposition part 300 does not have any structure connected to the outside except for the deodorization port 322.

In some cases, where a separate drainage structure is required, the drawer-type lower module 750 may include a module for connecting a drainage structure to connect a drain channel to a drain pipe of the sink 1, but alternatively, may further include a water tank that separately collects and discharges liquid.

In the decomposition part 300, the delivered food and food being decomposed by microorganisms are mixed and accumulated. Among the accumulated food, food of which decomposition is completed becomes compost with very small particles and a reduced weight.

Such compost is delivered to the collection part 500 through the transfer part 400 located at the top of the decomposition part 300 while moving farther along a larger trajectory due to the rotation of the stirring member 350 caused by a weight difference from newly introduced food.

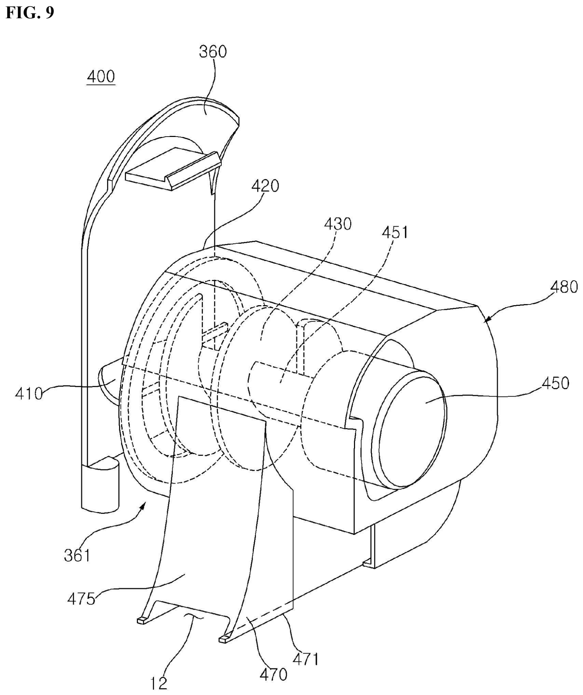

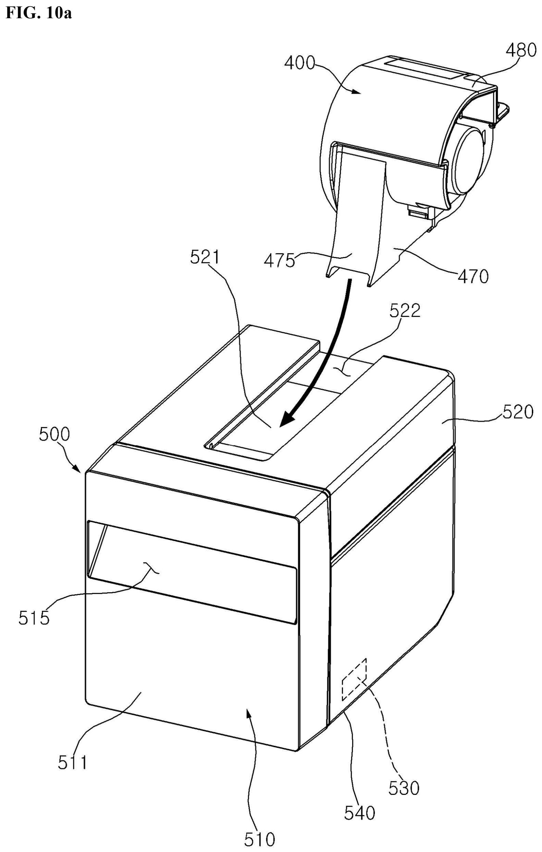

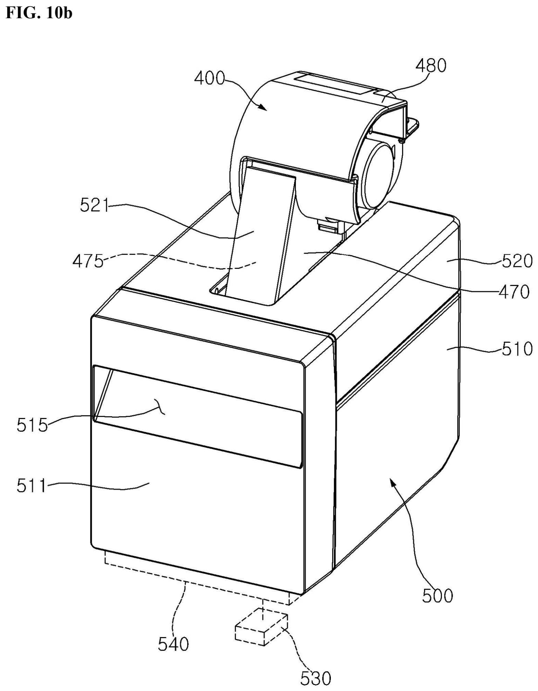

Hereinafter, the transfer part 400 and the collection part 500 will be described with reference to FIGS. 9 and 10.

FIG. 9 is a perspective view illustrating an interior of a transfer part 400 of the lower module 750 of the food disposal apparatus 10 of FIG. 1, and FIGS. 10a and 10b are state diagrams illustrating coupling of the transfer part 400 and the collection part 500.

First, referring to FIG. 9, the transfer part 400 may implement a transfer function through a transfer screw 430 and a decomposition tank propeller 410.

The transfer part 400 is present on one side of the decomposition part 300, for example, on a right side, and is positioned above the collection part 500.

Due to a height difference between the transfer part 400 and the stirring member 350 of the decomposition part 300, only compost having a small weight may selectively reach the transfer part 400. That is, only compost that forms a large trajectory up to the height due to the weight difference and undergoes motion by stirring is introduced into the transfer part 400, and the transfer part 400 is implemented such that the introduced compost moves to the collection part 500.

Specifically, the transfer part 400 has a partition wall 360, and the partition wall 360 has an inlet 361 with an open bottom, so that the decomposition part 300 and the transfer part 400 are connected through the inlet 361.

The partition wall 360 may be formed so that only compost may pass through the inlet 361, and as the food is composted, the compost may have a greatest displacement due to the weight difference and is capable of reaching the inlet 361. When the compost reaching the inlet 361 of the partition wall 360 is introduced into the inlet 361, the decomposition chamber propeller 410 for transferring the compost inward is placed inside the partition wall 360.

That is, the decomposition tank propeller 410 is disposed close to the partition wall 360 and serves to sweep and clear a region in front of the inlet 361.

The transfer screw 430 transfers the compost introduced into the transfer space 501 to the collection part 500. The transfer screw 430 may be provided with a rotation shaft 451 in a transfer direction of the compost, and as a helical blade 511 protruding from the rotation shaft 451 rotates, the food may be pushed toward the collection part 500 or pushed and moved in an opposite direction.

The motor 450 rotates the transfer screw 430 in one direction so that the compost moves from the decomposition part 300 region to the collection part 500 region.

In this case, when a signal indicating that a collection container 510 provided in the collection part 500 is full is received, the compost may be moved back from the collection part 500 region to the decomposition part 300 region, or the motor 450 may be stopped. The rotational driving of the motor 450 may be controlled by the control unit C.

The transfer part 400 may include a screen 420 covering the transfer screw 430, and the screen 420 may prevent transferred compost from escaping to the outside. The screen 420 may be formed in a cylindrical shape extending from a partition wall and accommodates the transfer screw 430 and the motor 450. The screen 420 surrounds an outer circumferential surface of the transfer screw 430 and moves the compost from left to right, and discharges the compost toward the outlet 12 to fall into the collection part 500.

A bracket 470 of the transfer part 400 may protrude from a lower portion of the screen 420 toward the collection part 500, and fix the transfer part 400 to the cover 520 of the collection part 500. The bracket 470 of the transfer part 400 has an outlet 12 at a bottom thereof, and a border of the outlet 12 forms a rail 471 that slidably engages with a hinged cover 521 of the collection part 500 to enable fixation and communication.

Rotation of the transfer screw 430 may be implemented by driving the motor 450. The driving force of the motor 450 may be transmitted through the transfer screw 430 and the fixed shaft 451. In this case, the shaft 451 is fixed together with the propeller 410 so that the transfer screw 430 and the propeller 410 may be simultaneously rotated by one motor 450. In this case, when the transfer screw 430 and the propeller 410 have different rotational speeds, the rotational speeds may be controlled through separate gears. As described above, a space occupied by the motor 450 is minimized to contribute to device miniaturization, and power consumption may also be minimized.

As such, the transfer part 400 is present only above the collection part 500, and only compost, which consists of small and light particles, is selectively introduced into the transfer part 400 through the inlet 361, thereby having a structure that fundamentally prevents uncomposted food from being introduced into the transfer part 400.

Therefore, cases where food remains on the transfer part 400 for a long time or debris adheres to cause odors become very exceptional cases.

Further, by holding separate motors 330 and 450 for the decomposition part 300 and the transfer part 400, the stirring of the decomposition part 300 and the transfer of the transfer part 400 may be performed by independent control. As an example, when the stirring shaft 331 rotates only in one direction, food in one side region may be accumulated, preventing the food waste from being stirred evenly. Therefore, in this case, the stirring shaft 331 may rotate periodically in the opposite direction, while the transfer screw 430 may rotate continuously to move food from the decomposition part 300 toward the collection part 500.

Further, stirring may be carried out continuously even when transferring from the transfer part 400 is interrupted due to a capacity of the collection part 500. For example, the stirring of the food may continue to be performed even while the collection container 520 is separated from a seating space of the collection part 500 for disposal of decomposed food.

The driving speed and the driving direction of the motor 450 may be controlled based on a control signal from the control unit C such as a processor. A specific power transmission structure is not limited thereto and may be configured in consideration of torque, rotational speed, spatial placement, and the like.

The collection part 500 may be positioned in a lower right portion within the internal case 320 of the lower module 750 in the rectangular parallelepiped shape as illustrated in FIGS. 10a and 10b.

The collection part 500 is inserted into a collection space 326 of the internal case 320 of the lower module 750.

The collection part 500 is a single module that is enabled to be individually assembled to and disassembled from the main body 700, and is also enabled to be assembled to and disassembled from the lower module 750.

That is, the collection part 500 is a module that is inserted into the collection space 326 in a state similar to an insertable waste container.

The collection part 500 is constituted by the cover 520 and the collection container 510 of the collection part 500.

The hinged cover 521 is placed in the cover 520 of the collection part 500.

The hinged cover 521 is opened when being coupled to the transfer part 400, and communicates an internal space of the collection container 510 with the outlet 12 of the transfer part 400.

The hinged cover 521 is closed when the user separates the collection part 500 from the collection space 326 and removes the collection part 500, and when the user reinstalls the collection part 500 in the food disposal apparatus 10, the hinged cover 521 is opened while riding up along an inclined surface 475 of the bracket 470 of the transfer part 400. To this end, the hinged cover 521 is hinge-coupled to a front side.

Therefore, when the collection part 500 is removed, the user may be prevented from viewing the compost, and the odor of the compost may be prevented from escaping.

The collection container 510 has a concave shape to provide an internal collection space, and may have a stepped structure to allow for the use of a vinyl cover.

When a predetermined amount is accumulated in the collection part 500, a sensor 530 is included that may measure the amount of compost in the collection part 500 so that the user may collect and dispose the predetermined amount of compost.

The sensor 530 of the collection part 500 may be a weight sensor, and a weight plate 540 is formed on a bottom surface of the collection container 510, and a weight of the compost is enabled to be detected through a load cell beneath the weight plate 540 and transmitted to the control unit C.

The sensor 530 of the collection part 500 may alternatively be a water level sensor placed inside the collection space, and various sensors such as an ultrasonic sensor, a laser sensor, an image sensor, etc., may be applied as the water level sensor.

As such, the coupling and communication between the collection part 500 and the transfer part 400 are achieved by sliding coupling between the outlet 12 of the transfer part 400 and the hinged cover 521 of the cover 520 of the collection part 500, thereby enabling sealing to prevent user discomfort from internal compost when removing the collection part 500, and allowing easy fastening and separation of the two modules.

Meanwhile, the food disposal apparatus 10 of an embodiment of the present disclosure further includes the drainage/deodorization module 600 in a separation space between the main body 700 and the lower module 750, i.e., in a rear space.

FIG. 11 is a schematic configuration diagrams illustrating the drainage deodorization module 600 of the food disposal apparatus 10 of FIG. 1.

The lower module 750 has an internal space defined by the case 751 of a rectangular parallelepiped lower module 750 having a smaller depth than the main body 700.

Due to such a depth difference, a separation space is present between the main body 700 and the case 751 of the lower module 750 at the rear of the lower module 750.

Such a separation space is positioned biased to the lower rear portion with respect to the entirety of the main body 700 of the food disposal apparatus 10. An exhaust fan 620 is formed on a rear surface of the separation space, that is, a rear surface of the body 700. Further, a drain pipe connection portion connected to the drain pipe of the sink 1 is formed on a bottom surface of the separation space, that is, a bottom surface of the body 700.

Negative pressure is formed inside the food disposal apparatus 10 by the exhaust fan 620, and odors and water vapor inside are discharged to the drain pipe of the sink 1 through a deodorization duct 610 connected to the exhaust fan 620.

The deodorization duct 610 is a spiral (helical) duct 610, and has one side having a region facing the exhaust fan 620, which is coupled to a ventilation port 322 formed on the rear surface of the case of the lower module 750, and the other side connected to the drain deodorization pipes 650 and 660.

The connection between the deodorization duct 610 and the drain deodorization pipes 650 and 660 may be formed through a coupling part 630, which may be implemented with an O-ring, etc.

The drain deodorization pipes 650 and 660 are formed as pipes having a plurality of bent portions connecting a first inlet connected to the drain pipe 270 of the solid-liquid separation part 200, a second inlet connected to the deodorization duct 610, and an outlet connected to an external drain pipe of the sink 1.

The drain deodorization pipes 650 and 660 form an s-shaped trap between the first inlet and the outlet, which includes a first pipe 650 for forming a path of washing water that flows down from the strainer from the first inlet, allowing the filtered liquid from the solid-liquid separation part 200 to flow into the external drain pipe. The s-shaped trap always retains water therein, thereby preventing odor backflow from the drain 4.

Meanwhile, the drain deodorization pipes 650 and 660 further include a second pipe 660 having at least one bent portion formed between the second inlet and the outlet.

In this case, a backflow prevention cover 670 is formed between the second pipe 660 and the outlet to prevent liquid from flowing backward from the first pipe 650 into the second pipe 660.

The backflow prevention cover 670 is provided to prevent an accident in which all microorganisms in the decomposition part 300 are killed when liquid flows back through the second pipe 660 and is injected into the decomposition part 300. A check valve is applicable as the backflow prevention cover 670.

The check valve may be configured to open the second pipe 660 and connect the second pipe 660 to the outlet when odors and water vapor are discharged through the second pipe 660, and to block the second pipe 660 by reverse gravity when liquid flows back through the outlet or the first pipe 650. That is, the check valve may be opened and closed by gravity. As an example for providing elasticity to the check valve, the check valve may be made of a silicone material with an upper side of the check valve which may fixed to an upper side of the second pipe 660. A fixed portion of the check valve may perform the same function as hinge fastening.

As such, two paths 650 and 660 are integrated and formed between the case of the main body 700 and the case 751 of the lower module 750, which is advantageous for space utilization. Further, by discharging both wastewater and odors through the drain of the sink 1 without forming a separate odor discharge path, odor discharge to the outside may be prevented, and a separate filter structure for minimizing odor discharge to the outside is not required. Therefore, a product may be simplified and cost may be reduced.

Further, when the lower module 750 and the main body 700 are coupled, coupling with the deodorization duct 610 is induced, thereby achieving fitting coupling without a separate physical coupling structure, and for this purpose, a sealing portion may be formed between the ventilation port of the lower module 750 and the deodorization duct 610.

In this case, the odor and water vapor from the solid-liquid separation space A are sucked into the transfer space B of the solid-liquid separation part 200 by the upper deodorization module 250 described above, and there is a structure in which the odor and moisture are introduced into the decomposition part 300 through the outlet 208 of the solid-liquid separation part 200. Therefore, the odor and water vapor from both the upper module 710 and the lower module 750 are all discharged to the second pipe 660 through the deodorization duct 610 via a rear opening portion 322 within the decomposition part 300.

The ventilation port of the lower module 750 is aligned to communicate with the rear opening 322 of the case of the decomposition part 300 to form negative pressure in all of the inside of the decomposition part 300 and the internal space of the solid-liquid separation part 200 through the opening at the upper portion of the decomposition part 300, and the transfer part 400 and the collection part 500 connected to the transfer part 400, thereby creating an air flow that allows both odors and water vapor to be discharged through the opening 322.

Further, a guide seal is formed between the exhaust fan 620 and the deodorization duct 610, and the guide seal assists the deodorization duct 610 of the lower module 750 to properly engage with the exhaust fan 620 of the main body 700, while forming a sealing structure that prevents odors from the decomposition part 300 from leaking to the outside.

The food disposal apparatus 10 of this embodiment includes a control unit C for recognizing a start command by rotation of the inlet cover 111 and controlling each module.

The control unit C may be implemented as a processor or microcomputer, and communicates with various sensors and the display part 14 in each module via wired or wireless communication to control the operation of each module accordingly.

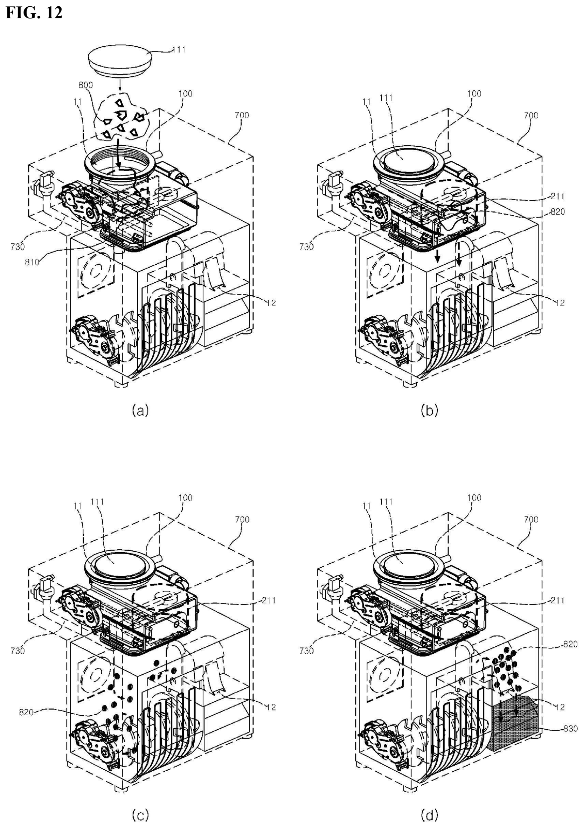

Hereinafter, the operation of the food disposal apparatus 10 of an embodiment of the present disclosure will be described with reference to FIGS. 12a to 12d.

FIGS. 12a to 12d are flowcharts illustrating the operation of the food disposal apparatus 10 of FIG. 1.

First, as illustrated in FIG. 12a, in the food disposal apparatus 10 of an embodiment of the present disclosure, which is built into the internal space 3 of the sink 1, when food waste is generated, food 800 is input into the inlet part 100 through the drain 4 of the sink bowl 2 of the sink 1.

When the food 800 is input into the filter part 210 through the inlet 100, liquid 810 in the food flows by gravity through perforations of the filter part 210 and through a hole between the bottom surface 212 of the filter part 210 and the case 201 of the solid-liquid separation part 200 into a first pipe 650 of the drainage/deodorization module 600. The liquid is discharged through the first pipe 650 to the drain of the sink 1, and only solids 820 remain in the filter part 210.

As illustrated in FIG. 12b, when the user rotates the inlet cover 111 at a predetermined angle or more while placing the inlet cover 111 on the cover guide 130, the control unit C of the food disposal apparatus 10 instructs a transfer operation of the solid-liquid separation part 200.

The solid-liquid separation part 200 horizontally moves only the solid 820 from which the liquid is separated from the food which moves from the inlet part 100 forward, and drops the solids 820 to the decomposition part 300 at the bottom thereof.

That is, while the motor 220 of the solid-liquid separation part 200 is driven, the linear rack 222 linearly moves forward on the horizontal plane by rotation of the pinion 221. As a result, the connected transfer body 230 moves the side surface 211 of the filter part 210 forward. In this case, since the bottom surface 212 of the filter part 210 remains in the solid-liquid separation space A, only the side surface 211 of the filter part 210 is present in the transfer space B, and the solid 820 in the filter part 210 falls down to the decomposition part 300 therebelow by gravity.

After a predetermined time elapses, the motor 220 rotates in the opposite direction to move the filter part 210 back to the solid-liquid separation space A.

Meanwhile, the food solids 820 that fall into the decomposition part 300 are mixed as the stirring member 350 rotates by rotation of the motor 330 of the decomposition part 300, and here, the microorganisms accommodated therein, the previous food being composted, and the currently input food are all mixed by stirring.

Through such continuous mixing and maintenance of a predetermined temperature by the heating wire member 328, a microbial fermentation process proceeds and the food is fermented and decomposed into compost 821.

Such decomposition is a process of converting an organic material into an inorganic material, which may be expressed as composting.

The decomposed compost 821 has smaller and lighter particles than the input food. Therefore, during stirring by the motor 330 of the decomposition part 300, the movement of food occurs from bottom to top, laterally in a wide upper space, and from top to bottom, utilizing an entire space of the decomposition part 300. Such a large trajectory is achieved by low-speed rotation of the stirring member 350, an integral screw form of the stirring member 350, and irregular recessed portions 351.

As illustrated in FIG. 12d, the decomposed compost has a larger trajectory during agitation due to small and light particle characteristics, and accordingly may move to the transfer part 400 through the inlet 361 located below the partition wall 360 placed at an upper right portion.

When the motor 450 of the transfer part 400 is driven to rotate the transfer screw 430 and move the compost introduced through the inlet 361 to the right side, the compost flows into the collection part 500 at the bottom through the outlet 12 formed on the right side.

By the control unit C controlling the driving of the motor of each module, the motor of each module is enabled to rotate the shaft in a predetermined direction and speed according to characteristics, thereby enabling optimal driving.

As an example, when a water level sensor 370 is placed inside the decomposition part 300 and the water level sensor 370 detects compost material 821 forming a trajectory larger than a predetermined height, the motor of the transfer part 400 is operated to transfer the compost 821 by the transfer part 400.

Therefore, simple independent control is possible without a complex gear connection structure for rotating a plurality of modules with a single motor.

Further, when the weight of the compost 830 within the collection part 500 exceeds a predetermined value, the control unit C may receive a detection value from the weight sensor 530 and accordingly provide a discharge alarm of the collection part 500 to the display part 14 or an interlocked user terminal.

Such an alarm allows the user to separate only the collection part 500 from the case 751 of the lower module 750 and empty the internal compost 830.

As described above, the food disposal apparatus 10 of an embodiment of the present disclosure is built into the sink 1 and communicates with the drain 4 of the sink 1, and is connected to the water supply pipe and the drain pipe of the sink 1 to receive water and discharge liquid and odors from food to the drain pipe. Accordingly, an output from the food disposal apparatus 10 is limited to the compost in the collection part 500, and the user is capable of using the food disposal apparatus 10 without various modules for ventilation and deodorization for separate exhaust by emptying only the compost according to the alarm.

The food disposal apparatus 10 of an embodiment of the present disclosure is configured as separate modules comprising the upper module 710 that houses the inlet part 100 and the solid-liquid separation part 200, and the lower module 750 that houses the decomposition part 300, the transfer part 400, and the collection part 500, as described above. The lower module 750 is packaged in a separate case 751 and is configured to be coupled to and detached from the main body 700 as a drawer-type.

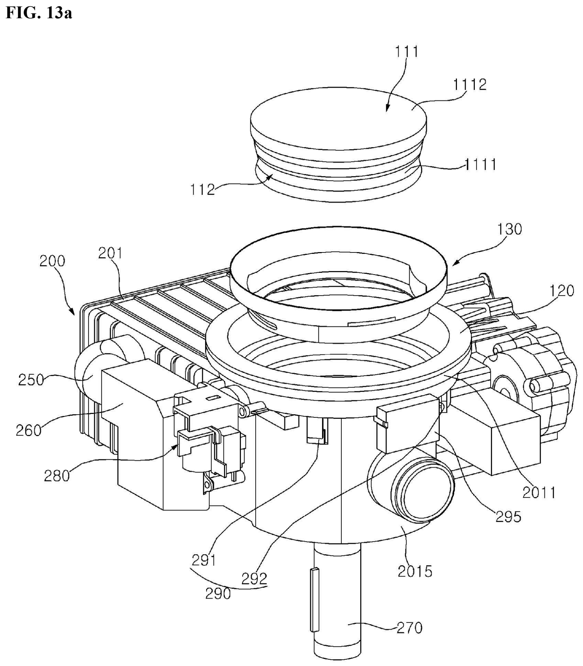

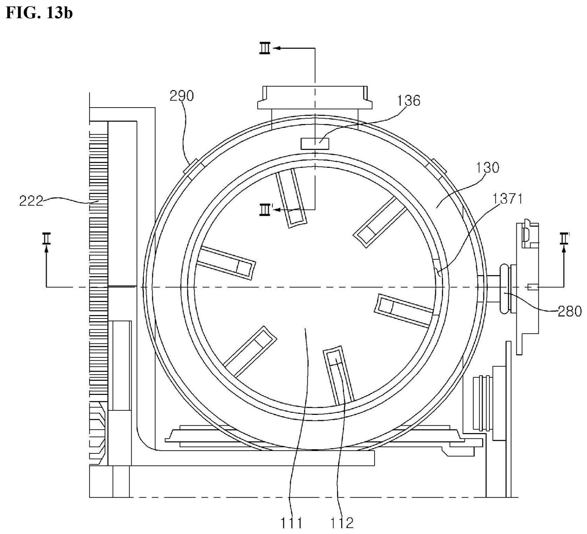

Hereinafter, a configuration and an operation which interlock with the inlet part 100 of the food disposal apparatus 10 of an embodiment of the present disclosure will be described with reference to FIGS. 13 to 21.

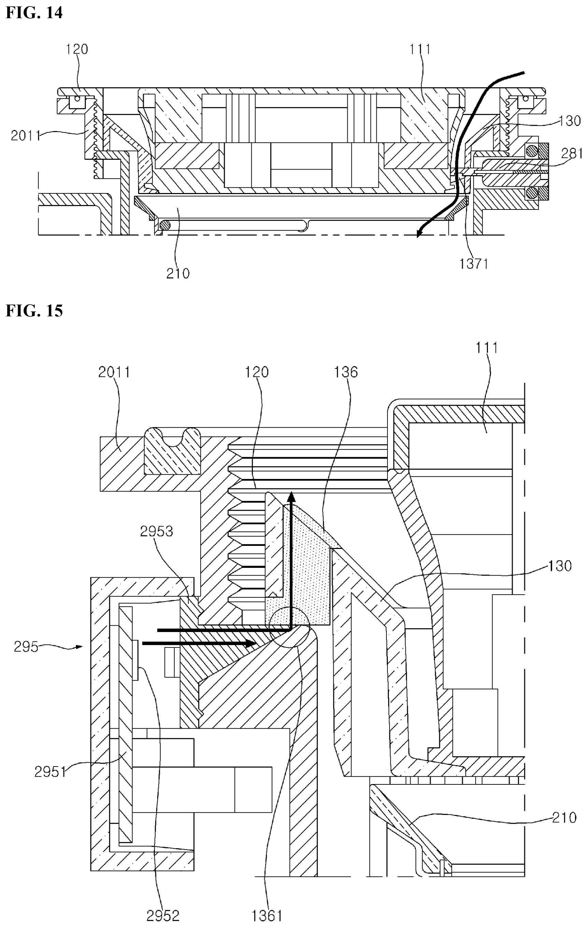

FIGS. 13a and 13b are an exploded perspective view and a top view illustrating fastening of an inlet part and a solid-liquid separation part of FIG. 5, FIG. 14 is a partial cross-sectional view of the inlet part portion of FIG. 13b taken along line II-II', and FIG. 15 is a partial cross-sectional view of the inlet part of FIG. 13b taken along line III-III'.

Referring to FIGS. 13a to 15, the inlet part 100 of the food disposal apparatus 10 according to an embodiment of the present disclosure includes a sink lock 120 that is coupled to the inlet of the solid-liquid separation part 200, an inlet cover 111, and a cover guide 130 that is assembled with the inlet cover 111 to detect a presence and operation start of the inlet cover 111.

An inlet 2011 of the solid-liquid separation part 200 is inserted into the drain 4 on the bottom surface of the sink bowl 2 and is coupled to communicate with the top opening of the solid-liquid separation part 200 within the sink 1 to form the input inlet 11 of the food disposal apparatus 10.

The inlet 2011 of the solid-liquid separation part 200 includes a seating surface having a smaller diameter than the top opening by forming the step on the side surface, and the cover guide 130 is seated on the seating surface.

The sink lock 120 is formed on the side surface of the inlet 2011 of the solid-liquid separator 200 and is threaded to a side surface of the inlet 2011 of the solid-liquid separation part 200 so as to completely cover the separation space with the sink bowl 2 of the sink 1 and to be in close contact with the top surface of the sink bowl 2. Therefore, the food disposal apparatus 10 and the sink 1 are coupled within the sink bowl 2 without any separation space by the sink lock 120.

The cover guide 130 is seated on the seating surface of the inlet 2011 of the solid-liquid separation part 200 while the sink lock 120 is fastened.

The cover guide 130 has a seating surface 137 on which the inlet cover 111 is seated, and guides the seating of the inlet cover 111.

The cover guide 130 includes a side surface 132 that overlaps with the side surface of the sink lock 120 within the side surface of the sink lock 120, and a seating surface 137 bent inwardly from a lower portion of the side surface 132, on which the inlet cover 111 is seated as described above.

Further, the cover guide 130 includes an expansion rim 131 having a step 133 so that the cover guide 130 is seated on the seating surface 137 of the inlet of the solid-liquid separation part 200 above the side surface 132.

By providing a slope of the expansion rim 131, the sink 2 may allow food injected through the drain 4 to slide and be delivered to the lower solid-liquid separation part 200.

At least a portion of the side surface 132 of the cover guide 130 is formed with a locker slot 134, and the locker slot 134 is an opening portion for fixing the inlet cover 111 and the cover guide 130 by inserting the locker arm 281 of the locker module 280 of the solid-liquid separation part into the slot 134.

The locker slot 134 may be formed as a rectangular opening that extends longitudinally along the side surface 132 with a predetermined width, and may include a ridge with an intermediate region inclined upward corresponding to a locker arm 281 of the locker module 280.

The seating surface 137 may be removed at the bottom corresponding to a region where the locker slot 134 is formed, but is not limited thereto. That is, when the seating surface 137 is removed, the seating surface 137 may have a C-shape with a portion removed rather than a ring shape.

The inlet cover 111 flows into the side surface of the sink lock 120 of the inlet part 100 and is inserted to be placed on the seating surface 137 of the cover guide 130.

In this case, the inlet cover 111 is seated within the cover guide 130 without a separate coupling structure such as threading, and is capable of adopting a cover for preventing external escape of food during an operation instruction and an operation of the food disposal apparatus 10.

The inlet cover 111 may be formed in a disk shape having a predetermined thickness to be rotatable on the cover guide 130, and is formed with a smooth surface and does not thus an uneven structure, as illustrated in FIG. 6b. Therefore, it is possible to prevent injected food from being left in the uneven structure and becoming contaminated.

The cover housing 1111 has an internal space, the interior may be formed in a cylindrical shape, and a predetermined number of magnets 112 can be placed inside the cover housing 1111 spaced apart from each other along a circumference.

When the inlet cover 111 is seated on the cover guide 130, when the inlet cover 111 is seated in a hole of the cover guide 130, the inlet cover 111 is supported by being placed on the seating surface 137, and an inner side surface of the cover housing 1111 and a side surface of the cover guide 130 are enabled to be spaced apart by a predetermined distance.

Therefore, water flowing through the sink 2 is enabled to enter the drain 270 through the separation distance even when the inlet cover 111 is closed.

In particular, as illustrated in FIG. 14, when the inlet cover 111 is seated, a cut space 1371 of the seating surface 137 functions as an inlet 281 for flowing water to the lower filter part 210, wherein the seating surface 137 of the cover guide 130 is formed in a C-shape with a portion thereof being cut.

Meanwhile, a guide part 136 is formed on an inner surface of the expansion rim 131 of the cover guide 130, and the guide part 136 provides a light guide path for guiding and transmitting upward a guide indication received from a light emitting module 295 placed in the lower solid-liquid separation part 200.

Referring to FIGS. 13a and 15, the light emitting module 295 is placed at a rear of the solid-liquid separation part 200, and is placed at an upper end of an outer surface of the case 201, preferably at a lower end of an inlet 2011 of the solid-liquid separation part 200.

The light emitting module 295 is a device that emits a specific color according to a control signal from the control unit C, and includes a light emitting element 2952 mounted on a circuit board 2951 and a light direction switching part placed on the light emitting element 2952.

In the light emitting module 295, the light emitting element 2952 selectively emits a specific color according to a control signal from the control unit C. To this end, the light emitting module 295 is enabled to be implemented as an LED element that emits three RGB lights, or alternatively is enabled to be implemented as an LED element that emits white light including respective color filters, but is not limited thereto.

Specifically, when the control unit C recognizes that the inlet cover 111 covers the inlet, the control unit C may transmit a control signal to the light emitting element 2952 to selectively emit a specific color.

The control unit C may transmit control signals to make the color of the light emitting element 2952 different when the inlet cover 111 covers the inlet and when food is being disposed.

The light emitting element 2952 may be placed to emit light from the bottom to the top for efficient spatial arrangement, and may include a light direction conversion part 2953 for guiding light injected from the bottom to a desired position.

In this case, the light direction conversion part may be adapted to a structure such as a prism or optical fiber, and may refract the light and inject the refracted light into the guide part placed above. When the light direction conversion part is required, the light direction conversion part is formed such that one end thereof penetrates through the inside of the case 201 and aligns with the guide part of the inner cover guide 130.

However, the light emitting element 2952 may be placed by penetrating through the case 201 so as to be placed directly below the guide part 136 without the light direction conversion part.

As illustrated in FIG. 15, the guide part 136 of the cover guide 130 includes a light guide body that is exposed at the step of the expansion rim 131 and penetrates to the inclined surface.

The light guide body may be implemented with translucent glass or plastic and guides light from the light emitting module 295 entering from below to the guide part 136 exposed on the inclined surface of the expansion rim 131.

The guide part 136 provides a guidance indication commanded by the control unit C to the user. In this case, the guidance indication may be a current operation state of the food disposal apparatus 10, for example, in-operation, operation completion, an error, etc., and indications of the in-operation, the operation completion, and the error may be briefly displayed by illuminated color, flicker, etc.

Preferably, when not operating, no illumination is maintained, and when rotation proceeds with food injected into the filter part and the inlet cover 111 placed thereon, a white element is turned on so that the guide part 136 emits white light, and the operation then proceeds. During operation, emission of the white light may be maintained.

Meanwhile, in case of an emergency situation or error occurrence, the red element is turned on so that the guide part may emit red light, and depending on the type of error, emission of a specific color may proceed.

Further, when it is desired to indicate that no more food can be input, guidance is possible by utilizing a flicker operation, and matching of specific errors is possible through combinations of various colors and operations.

Therefore, the user may quickly recognize a current state of the food disposal apparatus 10 by intuitively recognizing the illuminated color and the flicker operation of the guide part 136 which is set.

Such a guide part 136 is placed on the inclined surface of the expansion rim 131 and, when the user is standing in front of the sink bowl, i.e., in front of the food disposal apparatus 1, may be placed within an immediately visible region without changing posture, i.e., at the rear of the expansion rim.

Positional fixing of the guide part is enabled to be implemented by matching the seating surface 137 of the inlet 2011 of the solid-liquid separation part 200 and a seating structure on a back surface of the cover guide 130.

That is, by providing a complementary structure in which an internal structure of the inlet 2011 of the solid-liquid separation part 200 and a rear surface structure of the cover guide 130 are coupled to each other, the matching of the guide part 136 and the light direction conversion part 2953, and the matching of the locker module 280 and the locker slot 134 are possible.

A feedback magnet 135 may be placed below the guide part 136 of the cover guide 130, and the feedback magnet 135 may interlock with a magnet 112 of the inlet cover 111 to provide resistance during rotation of the inlet cover 111.

In this case, a magnetic force of the feedback magnet 135 may be greater than a magnetic force of the magnet 112 of the inlet cover 111.

As such, the inlet cover 111, the cover guide 130, and the inlet 2011 of the solid-liquid separation part 200 are implemented to have concentric circles with each other and are fastened and accommodated, whereby the inlet cover 111 is enabled to function as a cover for instructing the operation of the food disposal apparatus 10 and preventing external escape of food during the operation by merely being seated within the cover guide 130 without a separate coupling structure such as screw coupling.

Further, a water discharge function may be maintained to enable use of the sink 2 while the inlet cover 111 is placed thereon, thereby allowing free use of the sink 2 even when the food disposal apparatus is operating below.

Meanwhile, when the inlet cover 111 is seated, the locker arm 281 from the locker module placed in the solid-liquid separation part 200 passes through the locker slot of the cover guide 130 to secure the side surface of the inlet cover 111. Such an operation is understood to prevent detachment of the inlet cover 111 due to vibrations from subsequent movement and stirring of the filter part.

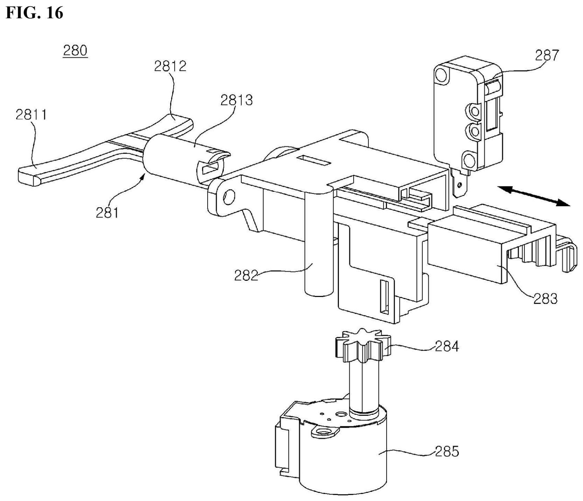

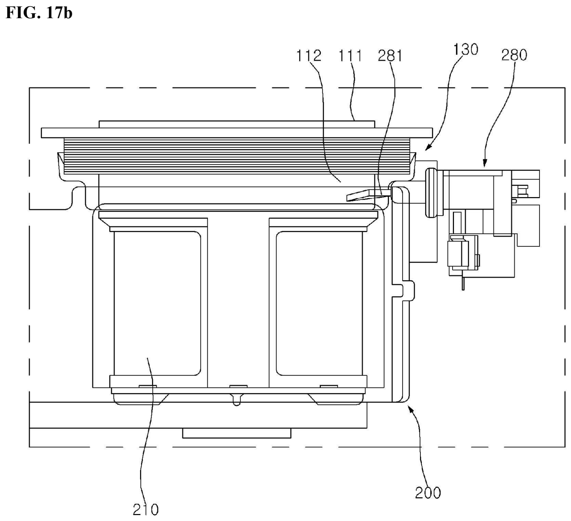

For such an operation, a structure and an operation of the locker module will be described with reference to FIGS. 16 to 17a and 17b.

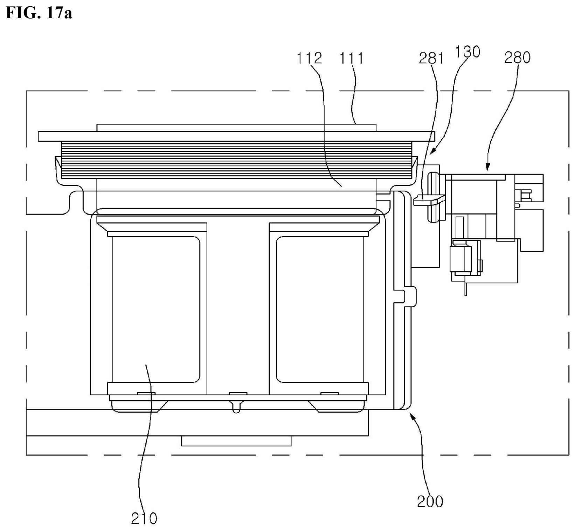

FIG. 16 is an exploded perspective view illustrating a locker module that implements fixing of the inlet part and the solid-liquid separation part 200 of FIG. 5, and FIGS. 17a and 17b are state diagrams illustrating a fixing operation of the inlet part and the solid-liquid separation part 200 by the locker module of FIG. 16.

Referring to FIG. 16, the locker module 280 of an embodiment of the present disclosure may be placed on the side surface of the case 201 of the solid-liquid separation part 200 and placed at one rear side of the solid-liquid separation part 200. For spatial utilization, the locker module 280 may be placed on an opposite side where the motor is placed, but is not limited thereto, and may be positioned anywhere the locker arm 281 may extend to a position capable of fixing the side surface of the inlet cover 111.

That is, the locker module 280 is placed on an outer surface of the solid-liquid separation space of the solid-liquid separation part 200 and horizontally moves the locker arm 281 by passing through a through hole of the case 201 at an upper portion of the solid-liquid separation space.

To this end, the locker module 280 comprises a locker base 282, a locker motor 285, a pinion 284, a locker rack 283 and a locker arm 281 as illustrated in FIG. 16.

The locker base 282 accommodates the locker rack 283 and forms a space in which the locker rack 283 moves horizontally according to the operation of the locker motor 285 and the pinion 284.

The locker motor 285 may be placed at a lower portion of the locker base 282, and when the inlet cover 111 rotates, the control unit C recognizes the operation command and operates the locker motor 285.

When the locker motor 285 operates, the pinion 284 rotates according to rotation of a rotary shaft, and the locker rack 283 performs horizontal movement left and right by sawteeth of the locker rack 283 that engages with the pinion 284.

The locker rack 283 may move horizontally toward the side surface of the case 201 or away from the side surface of the case 201 as the sawteeth are pushed out or pushed in according to rotation of the pinion 284.

One end of the locker rack 283, one end facing the case 201, is connected to one end of the locker arm 281.

Therefore, the locker arm 281 may advance toward or retreat from the solid-liquid separation space while moving horizontally together with the locker rack 283 according to the horizontal movement of the locker rack 283.

The locker arm 281 is placed to penetrate through the case 201 such that one end 2813 is connected to the locker rack 283 and the other end 2811 is placed inside the case 201.

Therefore, one end 2813 of the locker arm 281 may be formed in a bar type to penetrate the case 201 for advancing and retreating movement, and the other end 2811 has a shape of arms branched and extending in different directions as illustrated in FIG. 16.

The other end 2811 of the locker arm 281 which is branched horizontally moves toward the center of the solid-liquid separation space according to the driving of the locker motor 285 in a state of being placed close to the side surface of the case 201.

The sawteeth of such a locker rack 283 are placed to be aligned vertically as illustrated in FIG. 16, so that the pinion 284 may convert a rotational motion of the locker motor 285 transmitted from below into a horizontal motion.

The locker module 280 may further include a touch sensor 290.

The touch sensor 290 may be placed at one end of the locker base 282 and may set a limit point for the movement of the locker rack 283.

That is, when the locker rack 283 moves horizontally and contacts the touch sensor 290, the driving of the locker motor 285 is stopped and the rack 283 is no longer moved.

When the inlet cover 111 is introduced by the locker module 280 and the inlet cover 111 rotates, the control unit C may detect the rotation of the inlet cover 111 and operate the locker module 280 accordingly. Specifically, as illustrated in FIG. 17a, the locker module 280 before operation maintains a state where the branched other end 2811 of the locker arm 281 is placed close to the side surface of the case 201.

In this case, when the rotation of the inlet cover 111 is detected, the pinion 284 rotates according to the driving of the locker motor 285 and pushes the locker rack 283 toward the case 201 of the solid-liquid separation part 200 as illustrated in FIG. 17b. As a result, the locker arm 281 moves horizontally toward the center of the solid-liquid separation space.

In this case, the locker arm 281 passes through a locker slit 134 of the cover guide 130 placed at the front and moves straight until the locker arm 281 fixes the side surface of the inlet cover 111 seated on the cover guide 130.

When the locker arm 281 contacts the side surface of the inlet cover 111, the linear movement of the locker arm 281 is stopped, and the inlet cover 111 is prevented from being detached from the inlet 2011 by a branched angle of the locker arm 281.

The food disposal apparatus having such an inlet 2011 recognizes a start command by seating and rotation of the inlet cover 111.

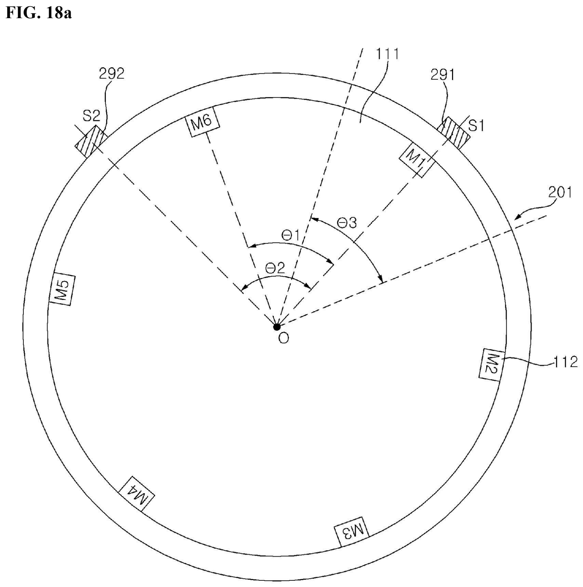

Hereinafter, a start command recognition operation of an embodiment of the present disclosure will be described with reference to FIGS. 18a to 21.

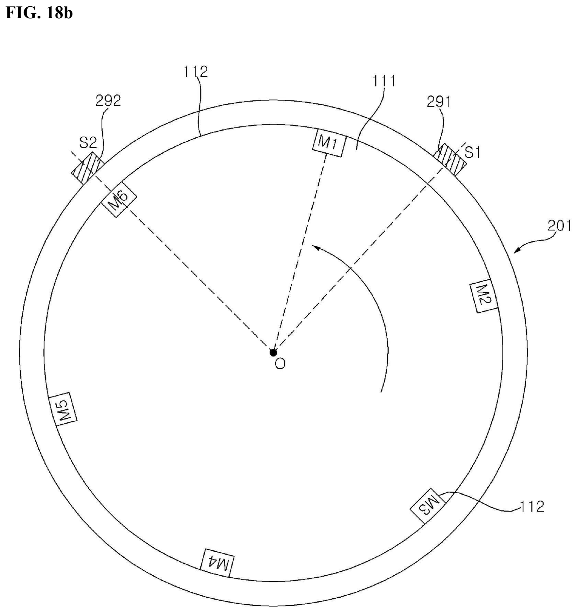

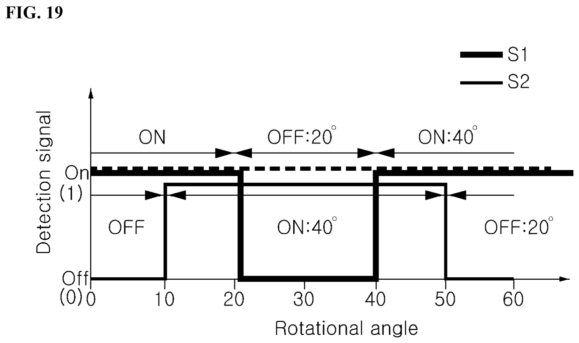

FIGS. 18a to 18c are state diagrams illustrating proceeding of rotation of an inlet cover 111 according to a first application example and FIG. 19 is a waveform diagram illustrating detection signals of a first sensor 290 and a second sensor 290 in FIGS. 18a and 18b.

As illustrated in FIG. 18a, a plurality of magnets 112 are placed spaced apart from each other on a lower portion of an upper plate of the inlet cover 111.

The plurality of magnets 112, which are magnets 112 having the size magnetic force and the same size, are formed to have the same polarity. Such magnets 112 are placed to have the same spacing distance and are enabled to be formed spaced apart from a center point of the cover housing 1111 by a predetermined distance, for example, at an angle of 360/n. The n is defined as the number of magnets 112.

Although FIG. 18a illustrates a case where six magnets 112 are placed, the present disclosure is not limited thereto.

When there are six magnets 112, the magnets 112 may be placed to have a spacing angle of 60 degrees.

When there are four magnets 112, the magnets 112 may be placed to have a spacing angle of 90 degrees.

A position of each magnet 112 and A position of a Hall sensors 290: 291 and 292 based on a center point O of the upper plate, that is, a center point of the inlet 2011, may be as illustrated in FIG. 18a.

At least two Hall sensors 290: 291 and 292 may be placed on the rear surface of the case 201 of the solid-liquid separation part 200 illustrated in FIG. 13a.

The two Hall sensors 290: 291 and 292 are spaced apart from each other and may be placed symmetrically with respect to an illumination module 295. The spacing angle of the Hall sensors 290: 291 and 292 thus placed is different from the spacing angle of the magnets 112.

Each Hall sensor 290: 291 or 292 of FIG. 13a corresponds to each sensor in FIG. 18a.

That is, a first Hall sensor 291 may correspond to a first sensor S1 and a second Hall sensor 292 may correspond to a second sensor S2, respectively.

An acute angle among the spacing angles $\theta2$ of the first and second sensors S1 and S2 may be greater than the spacing angle $\theta1$ of the magnets 112, M1 to M6.

In this case, the spacing angle $\theta2$ of the first and second sensors S1 and S2 may have the following mathematical relationship with the spacing angle $\theta1$ of the magnets 112, M1 to M6.

[Equation 1]
$$\theta2 = \theta1 * 0.5 + \theta1 * n$$

Here, n may be 0, 1, 2, 3, .... As an example, when the spacing angle $\theta1$ of the magnets 112, M1 to M6 is 90 degrees, the first and second sensors S1 and S2 may have spacing angles $\theta2$ of 45 degrees, 135 degrees, 225 degrees, and 315 degrees.

As another example, when the spacing angle $\theta1$ of the magnets 112, M1 to M6 is 60 degrees, the first and second sensors S1 and S2 may have spacing angles $\theta2$ of 30 degrees, 90 degrees, 150 degrees, 210 degrees, 270 degrees, and 330 degrees.

Additionally, the first and second sensors S1 and S2 as described above may be placed in a plurality of pairs. When the first and second sensors S1 and S2 are placed in a plurality of pairs, the first sensors S1 are enabled to be placed to be spaced apart to have the same angle as the spacing angle $\theta1$ of the magnets, and the second sensors S2 are enabled to be placed to have the spacing angle of Equation 1 from each first sensor S1.

In FIGS. 18a to 18b, the first and second sensors S1 and S2 may be placed to have a 90-degree angle for description, but the present disclosure is not limited thereto.

However, when a state in which the first and second sensors S1 and S2 detect the presence of the magnet 112 is defined as 1 and a state in which the sensors detect the absence of the magnet 112 is defined as 0, an angle that changes from 1 to 0 appears differently for each of the first and second sensors S1 and S2.

This is possible to proceed because the spacing angle $\theta2$ of the first and second sensors S1 and S2 and the spacing angle $\theta1$ of the magnets 112, M1 to M6 are different from each other.

As an example, as illustrated in FIGS. 18a to 18c, when the magnets 112 are installed at an interval of 60 degrees and the first and second sensors S1 and S2 are installed at an interval of 90 degrees, the inlet cover 111 is placed on the cover guide 130 in a rotatable state without a fixed position.

In this case, a detection range $\theta3$ of each of the first and second sensors S1 and S2 means a predetermined anterior-posterior angle when the first and second sensors S1 and S2 and the magnets 112 are placed within the same radius.

FIGS. 18a to 18c illustrate a case where the detection range $\theta3$ of the first and second sensors S1 and S2 is greater than 1/2 of the spacing angle $\theta1$ of the magnets 112, M1 to M6. As an example, in FIGS. 18a and 18b, the detection range $\theta3$ of the first and second sensors S1 and S2 may have a detection range of approximately 40 degrees.

In a first state shown in FIG. 18a, a first magnet M1 is placed on the same radius as the first sensor S1, and no magnet 112 is placed within the detection range $\theta3$ of the second sensor S2.

In this case, when the inlet cover 111 rotates counterclockwise or clockwise, detection signals from the first and second sensors S1 and S2 vary according to a rotational angle, as illustrated in FIG. 19.

Referring to FIG. 18b, as an example, when the inlet cover 111 rotates counterclockwise, the first sensor S1 detects the presence of the first magnet M1 up to 20 degrees and sends a detection signal of 1, and when the rotational angle exceeds 20 degrees, the inlet cover 111 and is outside the detection range, so the first sensor S1 sends a detection signal of 0.

Meanwhile, in the case of the second sensor S2, when the inlet cover 111 rotates at 10 degrees, the second sensor S2 detects the presence of a sixth magnet M6 and the detection signal varies from 0 to 1, and maintains 1 by recognizing the presence of the sixth magnet M6 during rotation at 40 degrees.

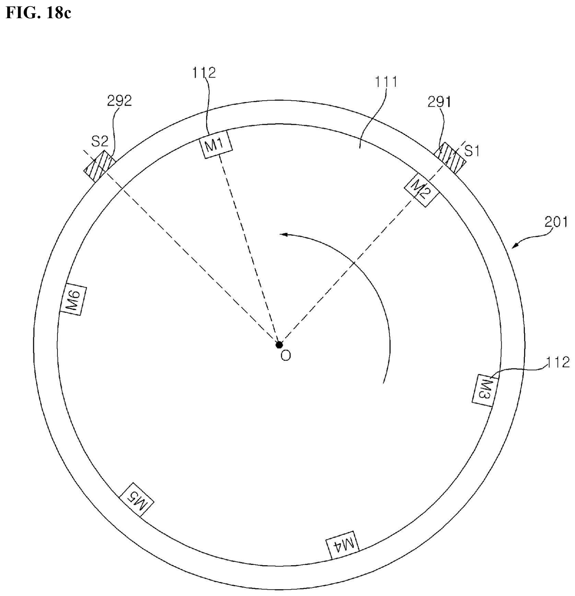

Referring to FIG. 18c, when the inlet cover 111 rotates further counterclockwise, in the case of the first sensor S1, when the rotation proceeds further and the rotational angle exceeds 40 degrees, the first S1 recognizes the presence of the second magnet M2 and sends the detection signal of 1 again.

When the rotational angle exceeds 50 degrees, the second sensor S2 recognizes no magnet 112, and sends the detection signal of 0.

Therefore, while the rotation angle varies from 0 to 60 degrees, the first sensor S1 changes from 1 to 0 at 20 degrees and changes from 0 to 1 again at 40 degrees, while the second sensor S2 changes from 0 to 1 at 10 degrees and changes from 1 to 0 again at 50 degrees.

As such, since the spacing angle θ2 of the sensor 290 and the spacing angle θ1 of the magnet 112 do not coincide with each other, intervals in which the detection signal changes at each sensor 290 do not coincide with each other.

Therefore, the user is notified that the operation start command may be executed by simple rotation of the cover 111, and when the user rotates the inlet cover 111, the control unit C may recognize the operation start command even within a small angle rotation of 0 degrees to 90 degrees.

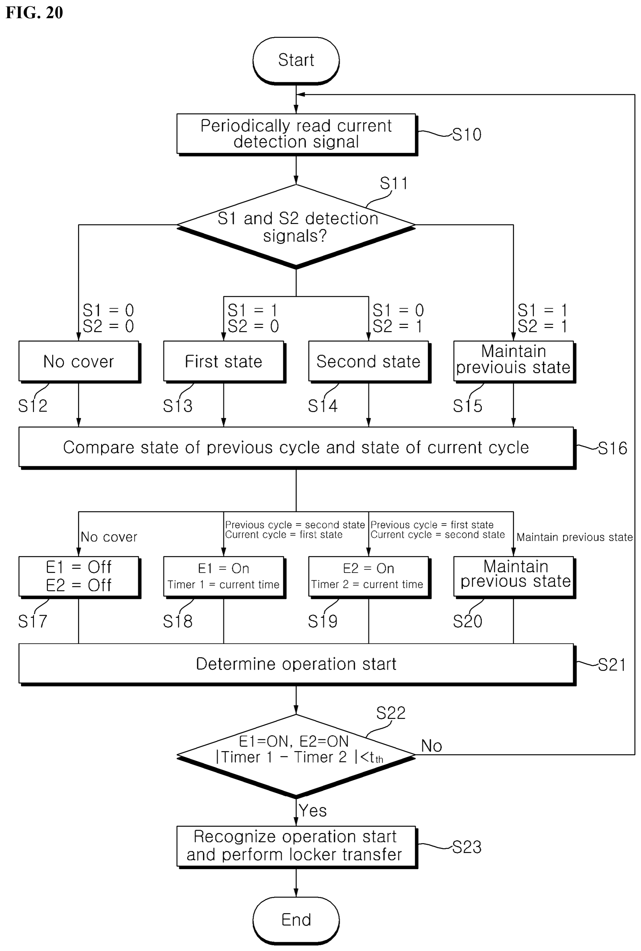

Hereinafter, the operation start recognition of the control unit C according to an embodiment of the present disclosure will be described with reference to FIG. 20.

First, the control unit C periodically reads and stores the detection signals from the first and second sensors S1 and S2 (S10).

To this end, the control unit C may include a memory of a predetermined size, and the memory may calculate and store enable values E1 and E2 and timer values for determining the state according to a value of each cycle.

The control unit may periodically read the detection signals from the first sensor 290 and the second sensor 290 to determine a current position and a current state of the inlet cover 111, adjust an emission color of the guide part 136, and perform driving of each module (S11).

When the detection signals of the first sensor S1 and the second sensor S2 in a current cycle are read, the detection signals of the first sensor S1 and the second sensor S2 satisfy one of four states as illustrated in FIG. 20.

In this case, when the detection signals of both the first sensor S1 and the second sensor S2 are 0, it is determined that the inlet cover 111 is not positioned on the cover guide 130 (S12).

When one of the detection signals from the first sensor S1 and the second sensor S2 has a value of 1 and the other has a value of 0, a case where the first sensor S1 is 1 is defined as a first state (S13), and a case where the second sensor S2 is 1 is defined as a second state (S14).

Meanwhile, when the detection signals of both the first sensor S1 and the second sensor S2 are 1, it is determined that a previous state is maintained (S15).

As a result, the state value of the current cycle is compared with the state value of the previous cycle to determine the state of the inlet cover 111 (S16).

Specifically, when it is determined that the cover 111 is absent in the current cycle, both Enable 1 (hereinafter, referred to as E1) and Enable 2 (hereinafter, referred to as E2) are set to an off state (S17).

Meanwhile, when the previous cycle is in the second state and the current cycle is in the first state, E1 is set to on and Timer 1 is set to a current time (S18).

Meanwhile, when the previous cycle is in the first state and the current cycle is in the second state, E2 is set to on and Timer 2 is set to the current time (S19).

Meanwhile, when both the sensors S1 and S2 have the value of 1 such that the previous state is maintained, values of E1 and E2 are not changed (S20).

When the E1 and E2 values and Timer 1 and 2 values are set as described above, the control unit C determines whether there is the operation start command from the user (S21).

Specifically, when E1 and E2 are both set to on and the difference between time values of Timer 1 and Timer 2 is within a threshold time tth, it is determined that there is the operation start command (S22).

That is, rotation of the inlet cover 111 occurs within a short threshold time tth, causing the value of the first sensor S1 to vary, and it is recognized as rotation that the value of the second sensor S2 also varies at a different time from the first sensor S1 or within a time not distant therefrom (S23).

When the rotation of the inlet cover 111 is thus detected, the control unit C performs a preparation for the operation of the food disposal apparatus 10 and drives the locker module 280 to perform a transfer operation of the transfer while the inlet cover 111 is fixed.

As a result, a start command may be applied and recognized by seating the inlet cover 111 and partially rotating the inlet cover 111 t without a user interface exposed to the outside, and operation start due to a malfunction may be prevented.

That is, by providing a plurality of Hall sensors 290; 291 and 292 and also providing a plurality of magnets 112, while forming the spacing angles θ1 and θ2 of the Hall sensors 290; 291 and 292 and the magnets 112 to be different from each other, angles at which each Hall sensor 290; 291, 292 turns on and off are set differently, so that the start command may be recognized only when a state in which both Hall sensors 290; 291 and 292 are varied is satisfied.

Therefore, an error caused by one component switching on or off due to minor impacts may be prevented, and the time difference value for the rotation as a condition, an operation is possible after accurate recognition of the rotational motion.

Further, such periodic operation of reading the detection signals from the two Hall sensors 290; 291 and 292 may be continued throughout the driving operation of the food disposal apparatus 10.

Meanwhile, the control unit C of the food disposal apparatus 10 stops the operation of reading the detection signals in a specific state and enters an idle state.

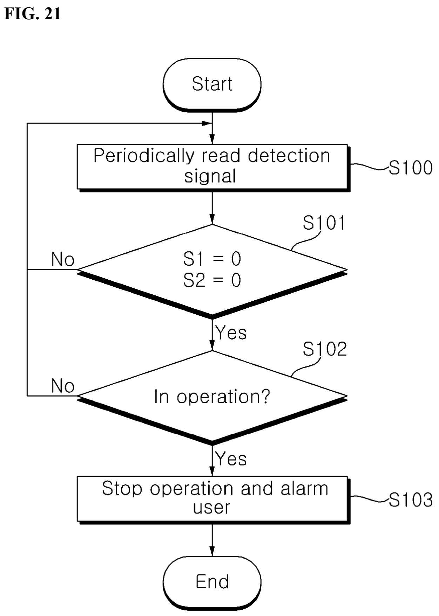

Hereinafter, the idle state entry of the present disclosure will be described with reference to FIG. 21.

FIG. 21 is a flowchart illustrating an emergency situation recognition method according to values of the first sensor S1 and the second sensor S2.

The control unit may periodically read the detection signals of the first and second sensors S1 and S2 while the inlet cover 111 is seated as illustrated in FIG. 20 to set the E1 and E2 values for the current state (S100).

In this case, when both the first sensor S1 and the second sensor S2 have a value of 0, it is determined that there is no inlet cover 111 (S101).

In this case, when the food disposal apparatus 10 is in operation until the previous cycle (S102), that is, when the motors of the solid-liquid separation part 200 and the decomposition part 300 and the transfer part 400 are operating, the control unit determines this as an emergency situation and stops all corresponding operations (S103).

That is, both the operation of the stirring motor 30 of the decomposition part 300 and the transfer operation of the transfer part 400 are stopped, thereby stopping both the mixing of food and microorganisms and the movement of compost inside the food disposal apparatus 10.

When it is determined that there is no inlet cover 111 as described above, leakage of internal food or odor through the inlet part 11 may be prevented by stopping movement of a target object.

When a user terminal is connected, the control unit C is capable of provide an alarm to the user through an application on the user terminal.

At the same time, the alarm may be provided through a specific color display or flicker of the guide part 136, and voice guidance may be performed through a speaker to alarm the user that the inlet cover 111 has been detached. In this case, when the inlet cover 111 is repositioned to the corresponding position, the operation may proceed anew.

As such, the control unit C periodically detects the presence and rotational state of the inlet cover 111 and drives each module accordingly, thereby enabling an operation instruction from the user without a separate control unit other than the inlet cover 111 that is exposed to the outside as a built-in food waste disposer inserted inside the sink 2.

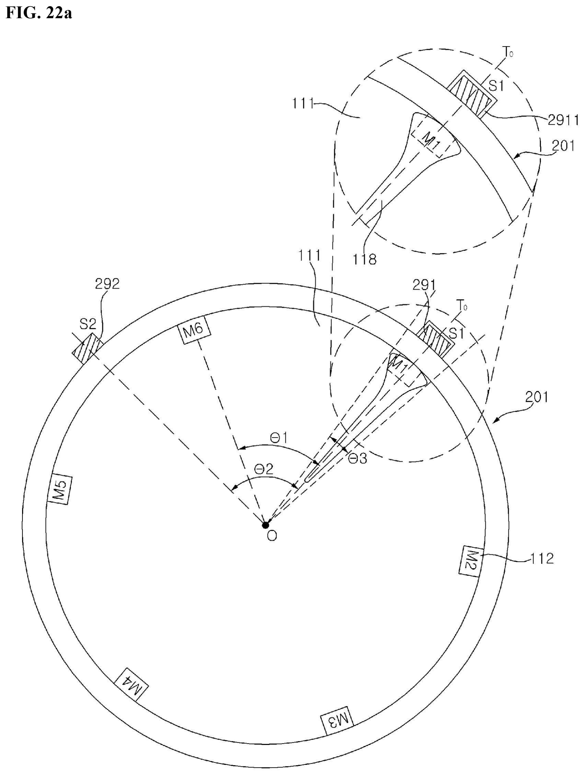

Meanwhile, an embodiment of the present disclosure provides an inlet cover and a state recognition method according to a second application example in FIGS. 22a to 24.

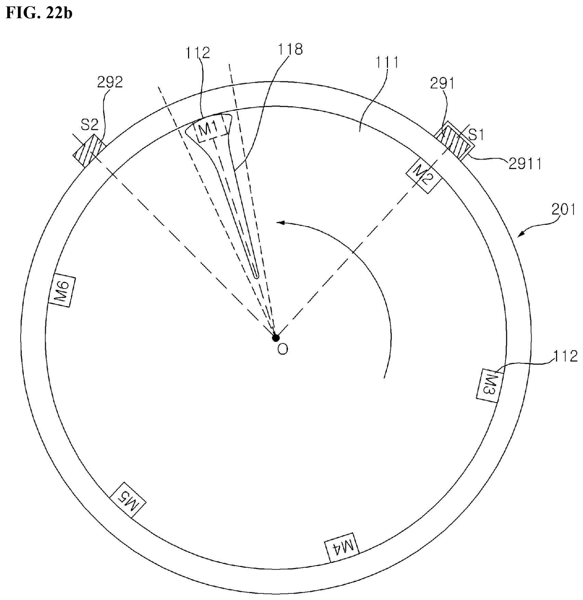

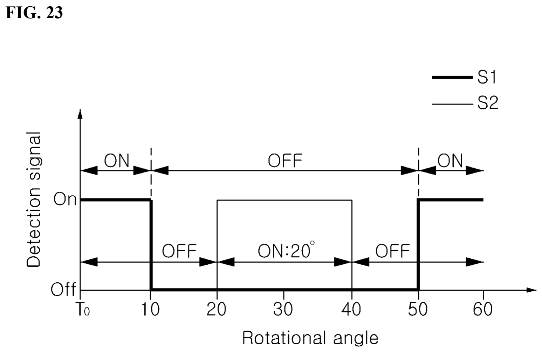

FIGS. 22a and 22b are state diagrams illustrating proceeding of rotation of an inlet cover according to a second application example and FIG. 23 is a waveform diagram illustrating detection signals of a first sensor and a second sensor in FIGS. 22a and 22b.

In the second application example of FIGS. 22a and 22b, a plurality of magnets 112 are placed spaced apart from each other on a lower portion of an upper plate of the inlet cover 111.

The plurality of magnets 112, which are magnets 112 having the size magnetic force and the same size, are formed to have the same polarity. Such magnets 112 are placed to have the same spacing distance and are enabled to be formed spaced apart from a center point of the cover housing 1111 by a predetermined distance, for example, at an angle of 360/n. The n is defined as the number of magnets 112.

A relationship between the placement and the spacing angles θ1 and θ2 of the magnets 112 and the first and second sensors S1 and S2 in FIGS. 22a and 22b is the same as that in FIGS. 18a and 18b and Equation 1.

In FIGS. 22a and 22b, an acute angle among the spacing angles θ2 of the first and second sensors S1, S2 may be greater than the spacing angle θ1 of the magnets 112, M1 to M6.

In FIGS. 22a to 22b, the first and second sensors S1 and S2 may be placed to have a 90-degree angle for description, but the present disclosure is not limited thereto.

However, when a state in which the first and second sensors S1 and S2 detect the presence of the magnet 112 is defined as 1 and a state in which the sensors detect the absence of the magnet 112 is defined as 0, an angle that changes from 1 to 0 appears differently for each of the first and second sensors S1 and S2.

This is possible to proceed because the spacing angle θ2 of the first and second sensors S1 and S2 and the spacing angle θ1 of the magnets 112, M1 to M6 are different from each other.

As an example, as illustrated in FIGS. 22a and 22b, when the magnets 112 are installed at an interval of 60 degrees and the first and second sensors S1 and S2 are installed at an interval of 90 degrees, the inlet cover 111 is placed on the cover guide 130 in a rotatable state.

In this case, the detection range θ3 of the first and second sensors S1 and S2 in FIGS. 22a and 22b refers to a predetermined anterior-posterior angle when the first and second sensors S1 and S2 and the magnet 112 are placed within the same radius, and the description is based on a case where the detection range θ3 of the first and second sensors S1 and S2 is less than 1/2 of the spacing angle θ1 of the magnets 112, M1 to M6.

When the detection range θ3 of the first and second sensors S1 and S2 is less than 1/2 of the spacing angle θ1 of the magnets 112, M1 to M6, as illustrated in FIG. 23, there is an interval where both the first and second sensors S1 and S2 fail to detect the magnets 112, M1 to M6 and emit a detection signal of 0 according to the rotation of the inlet cover 111.

That is, while the inlet cover 111 is present and rotating, there may be multiple intervals in which both the first and second sensors S1 and S2 emit the detection signal of 0.

Therefore, the food disposal apparatus 10 may specify a starting point T0, which is a position where the inlet cover 111 is initially placed, in order to distinguish a state where the inlet cover 111 is absent and an interval where the inlet cover 111 is present within the inlet 2011 while the detection signal is 0.

To this end, as illustrated in FIG. 22a, the inlet cover 111 may further include a structural member 118 for aligning one of the magnets 112, M1 to M6 to match the first sensor S1 at the starting point T0 on the same diameter.

The structural member 118 may be implemented as a rib protruding upward from the top surface of the inlet cover 111 as illustrated in FIG. 22a, and may be formed with a predetermined length to pass over the magnets 112, M1 to M6 along the radius.

Therefore, detection of the inlet cover 111 is initiated by placing the inlet cover 111 such that a longitudinal direction of the structural member 118 aligns with the starting point T0.

The starting point T0 is recognizable by the user through a light source or fluorescent member 291 formed around the first sensor S1 that emits a specific light.

Meanwhile, alternatively, a magnetic body that exerts mutual attractive force may be placed between the inlet of the solid-liquid separation part 200 and the inlet cover 111. Therefore, when the inlet cover 111 is placed at the inlet 2011 by the magnetic body, the inlet cover 111 may rotate to the starting point T0 and be automatically position-adjustable, and after being positioned at the starting point T0, detection by the first and second sensors S1 and S2 for rotation may proceed.

As such, when the detection range θ3 of the first and second sensors S1 and S2 is less than 1/2 of the spacing angle θ1 of the inlet cover 111, one magnet 112, M1 to M6 of the inlet cover 111 at the starting point T0 may be matched with the position of the first sensor S1, and then the rotation operation may proceed.

The detection range θ3 of the first and second sensors S1 and S2 may have a detection range of approximately 20 degrees.

In the first state shown in FIG. 22a, the first magnet M1 is placed on the same radius, that is, at the starting point T0 as the first sensor S1, and no magnet 112 is placed within the detection range θ3 of the second sensor S2.

In this case, when the inlet cover 111 rotates counterclockwise or clockwise, detection signals from the first and second sensors S1 and S2 vary according to a rotational angle, as illustrated in FIG. 23.

As an example, when the inlet cover 111 rotates counterclockwise, the first sensor S1 detects the presence of the first magnet M1 up to 10 degrees and sends a detection signal of 1, and when the rotational angle exceeds 10 degrees, the inlet cover 111 and is outside the detection range, so the first sensor S1 sends a detection signal of 0. In this case, when the rotation further proceeds and the rotational angle exceeds 50 degrees, the first sensor S1 recognizes the presence of the second magnet M2 and again transmits the detection signal of 1.

Meanwhile, in the case of the second sensor S2, when the inlet cover 111 rotates at 20 degrees, the second sensor S2 detects the presence of a sixth magnet M6 and the detection signal varies from 0 to 1, and maintains 1 by recognizing the presence of the sixth magnet M6 during rotation at 40 degrees, and then when the rotational angle exceeds 40 degrees, no magnet 112 is recognized, so the sensor S2 transmits the detection signal of 0 again.

Therefore, while the rotation angle varies from 0 to 60 degrees, the first sensor S1 changes from 1 to 0 at 10 degrees and changes from 0 to 1 again at 50 degrees, while the second sensor S2 changes from 0 to 1 at 20 degrees and changes from 1 to 0 again at 20 degrees.

As such, since the spacing angle θ2 of the sensor 290 and the spacing angle θ1 of the magnet 112 do not coincide with each other, sections in which the detection signal changes at each sensor 290 do not coincide with each other.

Therefore, the user is notified that the operation start command may be executed by simple rotation of the cover 111, and when the user rotates the inlet cover 111, the control unit C may recognize the operation start command even within a small angle rotation of 0 degrees to 90 degrees.

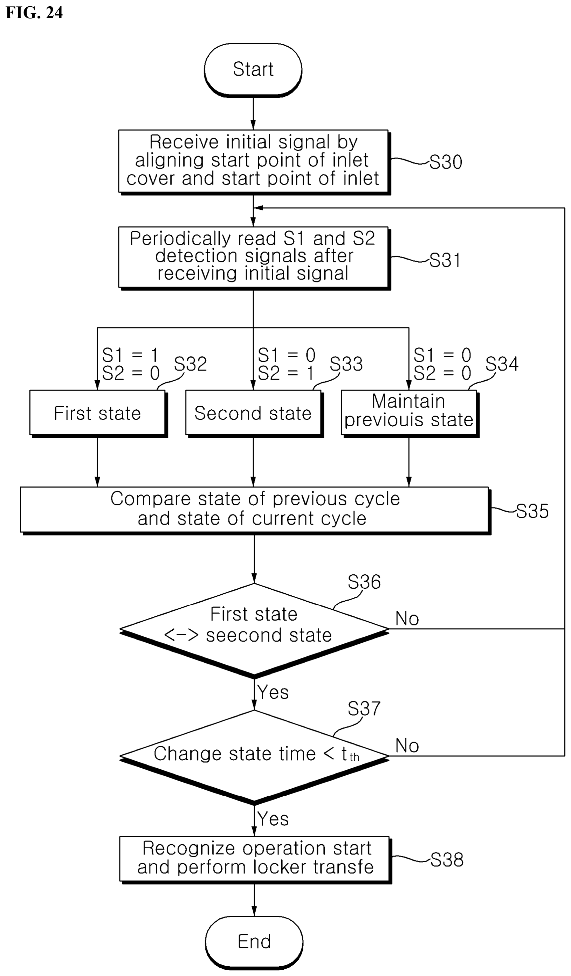

Hereinafter, a method for recognizing the state of rotation of the inlet cover 111 will be described with reference to FIG. 24.

First, when the user places the inlet cover 111 on the cover guide 116 such that a starting point T0, which is one of the first and second sensors S1 and S2, and one of the magnets 112, M1 to M6 are aligned in a straight line, the control unit C receives an initial detection signal from the first and second sensors S1 and S2 (S30).

Next, the control unit C periodically reads and stores the detection signals from the first and second sensors S1 and S2 (S31).

The control unit C may periodically read the detection signals from the first sensor 290 and the second sensor 290 to determine a current position and a current state of the inlet cover 111, adjust an emission color of the guide part 136, and perform driving of each module.

When the detection signals of the first sensor S1 and the second sensor S2 in a current cycle are read, the detection signals of the first sensor S1 and the second sensor S2 satisfy one of three states as illustrated in FIG. 24.

In this case, when the detection signals of both the first sensor S1 and the second sensor S2 are changed to 0 by rotation after receiving the initial detection signal, it is determined that the inlet cover 111 is positioned on the cover guide 130 and a previous state is maintained (S34).

When one of the detection signals from the first sensor S1 and the second sensor S2 has a value of 1 and the other has a value of 0, a case where the first sensor S1 is 1 is defined as a first state (S32), and a case where the second sensor S2 is 1 is defined as a second state (S33).

As a result, the state value of the current cycle is compared with the state value of the previous cycle to determine the state of the inlet cover 111 (S35).

Specifically, when the previous cycle is in the second state and the current cycle changes to the first state, or when the previous cycle is in the first state and the current cycle is in the second state, a time between the first state and the second state, which is a change state time, is measured (S36).

When it is satisfied that the measured change state time is within a threshold time tth, it is determined that there is an operation start command from the user (S37).

That is, rotation of the inlet cover 111 occurs within a short threshold time tth, causing the value of the first sensor S1 to vary, and it is recognized as rotation that the value of the second sensor S2 also varies at a different time from the first sensor S1 or within a time not distant therefrom.

When the rotation of the inlet cover 111 is thus detected, the control unit C performs a preparation for the operation of the food disposal apparatus 10 and drives the locker module 280 to perform a transfer operation of the transfer while the inlet cover 111 is fixed (S38).

As a result, a start command may be applied and recognized by seating the inlet cover 111 and partially rotating the inlet cover 111 t without a user interface exposed to the outside, and operation start due to a malfunction may be prevented.

That is, by providing a plurality of Hall sensors 290; 291 and 292 and also providing a plurality of magnets 112, while forming the spacing angles $\theta1$ and $\theta2$ of the Hall sensors 290; 291 and 292 and the magnets 112 to be different from each other, angles at which each Hall sensor 290; 291, 292 turns on and off are set differently, so that the start command may be recognized only when a state in which both Hall sensors 290; 291 and 292 are varied is satisfied.

Therefore, an error caused by one component switching on or off due to minor impacts may be prevented, and the time difference value for the rotation as a condition, an operation is possible after accurate recognition of the rotational motion. Additionally, depending on the detection range of the Hall sensors 290, 291 and 292, in the case of Hall sensors 290, 291 and 292 with low power, various applications are possible by implementing separate recognition of a rotation detection start point.

An embodiment of the present disclosure includes each of the embodiments and various modifications thereof discussed in the present disclosure. According to an embodiment of the present disclosure, at least one or more features described in one embodiment or example may be equally applied to other embodiments or examples described above. Features of one or more of the aforementioned embodiments or examples may be combined with each of the aforementioned embodiments or examples. One or more embodiments of the present disclosure or any total or partial combination of embodiments is also part of an embodiment of the present disclosure.

**Claims**

1. A food disposal apparatus comprising:

   an inlet part including an inlet cover covering an inlet, and a cover guide seated within the inlet and guiding the inlet cover;
   a solid-liquid separation part which receives food from the inlet, separates liquid from the food, and drops the solid food downwards; and
   a decomposition part which is placed below the solid-liquid separation part and includes a stirring module stirring and mixing the food with microorganisms,
   wherein the inlet cover rotates on the cover guide, operations of the solid-liquid separation part and the decomposition part are started.

2. The food disposal apparatus of claim 1, wherein the inlet is defined as an entrance of the solid-liquid separation part, and the entrance of the solid-liquid separation part, the cover guide, and the inlet cover form a concentric circle.

3. The food disposal apparatus of claim 2, wherein the cover guide includes a side surface that overlaps with an inner surface of the entrance of the solid-liquid separation part, and a seating surface bent inward from a lower portion of the side surface, on which the inlet cover is seated.

4. The food disposal apparatus of claim 3, wherein the side surface of the cover guide includes an expansion rim having a slope at a portion thereof.

5. The food disposal apparatus of claim 4, wherein the seating surface of the cover guide is formed in a C-shape with a portion thereof being opened.

6. The food disposal apparatus of claim 5, wherein the side surface of the cover guide includes a locker slot that allows a locker arm to penetrate along a curved surface.

7. The food disposal apparatus of claim 6, wherein the inlet cover is placed on the seating surface of the cover guide and allows liquid from the top to flow downward through an opened region of the seating surface.

8. The food disposal apparatus of claim 6, wherein the inlet cover includes an upper plate, and a cover body extending downward from the upper plate, and having a narrower diameter than the upper plate and a predetermined thickness.

9. The food disposal apparatus of claim 8, wherein the inlet cover is formed in a disc shape.

10. The food disposal apparatus of claim 8, wherein the inlet cover has an uneven flat shape on a surface thereof.

11. The food disposal apparatus of claim 8, wherein the cover body includes a plurality of magnets, and the plurality of magnets are spaced apart from each other at the same first angle.

12. The food disposal apparatus of claim 11, wherein at least two sensors for detecting the presence of the plurality of magnets are placed spaced apart from each other at the entrance of the solid-liquid separation part.

13. The food disposal apparatus of claim 12, wherein the second angle is different from the first angle.

14. The food disposal apparatus of claim 12, wherein the second angle is larger than the first angle.

15. The food disposal apparatus of claim 12, wherein when the at least two sensors include a first sensor, and a second sensor spaced apart from the first sensor, an angle at which the first sensor detects a state change of the magnet and an angle at which the first sensor detects the state change of the magnet are different from each other at the time of rotating the inlet cover.

16. The food disposal apparatus of claim 15, wherein detection signals of the first sensor and the second sensor are periodically read to determines that the inlet cover rotates when the state changes of the first sensor and the second sensor occur within a threshold time.

17. The food disposal apparatus of claim 16, wherein the inlet cover includes six magnets, and respective magnets are spaced apart from each other at the first angle of 60 degrees, and the first sensor and the second sensor are spaced apart from each other at the second angle of 90 degrees.

18. The food disposal apparatus of claim 4, wherein the cover guide further includes a light emitting guide part that indicates a state of the food disposal apparatus to a user in an inclined region of the expansion rim.

19. The food disposal apparatus of claim 18, wherein the inlet of the solid-liquid separation part further includes an illumination module for emitting a specific light according to the state of the food disposal apparatus to the light emitting guide part in a region matching the light emitting guide part.

20. The food disposal apparatus of claim 19, wherein the solid-liquid separation part further includes a locker module that, when it is determined that the operation of the food disposal apparatus starts based on rotation of the inlet cover, pushes a locker arm from the side surface of the inlet through the locker slot to fix the inlet cover.

21. A food disposal apparatus comprising:

   an inlet part including an inlet cover covering an inlet, and a cover guide seated within the inlet and guiding the inlet cover;
   a solid-liquid separation part which receives food from the inlet, separates liquid from the food, and drops the solid food downwards;
   a decomposition part which is placed below the solid-liquid separation part and includes a stirring module stirring and mixing the food with microorganisms;
   a plurality of magnets placed spaced apart from each other in the inlet cover;
   at least two sensors placed in the solid-liquid separation part and detecting the presence of the plurality of magnets; and
   a control unit operating at least one of the solid-liquid separation part and the decomposition part based on sensing values input from the sensors according to movement of the inlet cover.

FIG. 1

**FIG. 2**

**FIG. 3**

**FIG. 4**

EP 4 711 537 A1

**FIG. 5**

**FIG. 6a**

32

**FIG. 6b**

**FIG. 7a**

**FIG. 7b**

**FIG. 7c**

**FIG. 7d**

**FIG. 8**

**FIG. 9**

**FIG. 10a**

**FIG. 10b**

**FIG. 11**

<u>600</u>

270

640
750
740
650

610
322
620
630

680  670  660

----→ Liquid path
====> odor/water vapor path

U
Ri ←  → Le
F
D

**FIG. 12**

(a)

(b)

(c)

(d)

**FIG. 13a**

**FIG. 13b**

**FIG. 14**

**FIG. 15**

**FIG. 16**

**FIG. 17a**

**FIG. 17b**

**FIG. 18a**

**FIG. 18b**

**FIG. 18c**

**FIG. 19**

**FIG. 20**

```
                          ( Start )
                              │
                              ▼
              ┌──────────────────────────────┐
              │ Periodically read current     │──S10
              │ detection signal              │
              └──────────────────────────────┘
                              │
                              ▼
                    S11
              ◇ S1 and S2 detection ◇
              ◇      signals?        ◇
```

|              |              |              |              |
|--------------|--------------|--------------|--------------|
| S1 = 0<br>S2 = 0 | S1 = 1<br>S2 = 0 | S1 = 0<br>S2 = 1 | S1 = 1<br>S2 = 1 |
| No cover | First state | Second state | Maintain previouis state |
| S12 | S13 | S14 | S15 |

```
              ┌──────────────────────────────────────────────┐
              │ Compare state of previous cycle and state      │──S16
              │ of current cycle                               │
              └──────────────────────────────────────────────┘
```

|              |              |              |              |
|--------------|--------------|--------------|--------------|
| No cover | Previous cycle = second state<br>Current cycle = first state | Previous cycle = first state<br>Current cycle = second state | Maintain previous state |
| E1 = Off<br>E2 = Off | E1 = On<br>Timer 1 = current time | E2 = On<br>Timer 2 = current time | Maintain previous state |
| S17 | S18 | S19 | S20 |

```
              ┌──────────────────────────────────────────────┐
              │          Determine operation start             │──S21
              └──────────────────────────────────────────────┘
                              │
                              ▼
                         S22
              ◇ E1=ON, E2=ON            ◇     No
              ◇ |Timer 1 - Timer 2 |<$t_{th}$} ◇ ──────┐
                              │                          │
                            Yes                          │
                              ▼                          │
              ┌──────────────────────────────┐           │
              │ Recognize operation start     │──S23      │
              │ and perform locker transfer   │           │
              └──────────────────────────────┘           │
                              │
                              ▼
                          ( End )
```

**FIG. 21**

```
                    ┌──────────┐
                    │  Start   │
                    └────┬─────┘
                         │
    ┌────────────────────▼────────────────────┐
    │     Periodically read detection          │──── S100
    │                signal                    │
    └────────────────────┬────────────────────┘
                         │
                    ╱────▼────╲
          No       ╱  S1 = 0   ╲        S101
         ◄────────◄   S2 = 0    ►
                    ╲          ╱
                     ╲────┬───╱
                         │ Yes
                    ╱────▼────╲          S102
          No       ╱           ╲
         ◄────────◄ In operation? ►
                    ╲          ╱
                     ╲────┬───╱
                         │ Yes
    ┌────────────────────▼────────────────────┐
    │       Stop operation and alarm          │──── S103
    │                 user                     │
    └────────────────────┬────────────────────┘
                         │
                    ┌────▼─────┐
                    │   End    │
                    └──────────┘
```

**FIG. 22a**

**FIG. 22b**

**FIG. 23**

**FIG. 24**

```
                    ┌─────────┐
                    │  Start  │
                    └─────────┘
                         │
                         ▼
        ┌──────────────────────────────────┐
        │   Receive initial signal by       │── S30
        │  aligning start point of inlet    │
        │  cover and start point of inlet   │
        └──────────────────────────────────┘
                         │
                         ▼
        ┌──────────────────────────────────┐
        │   Periodically read S1 and S2      │── S31
        │    detection signals after         │
        │     receiving initial signal       │
        └──────────────────────────────────┘
```

S1 = 1
S2 = 0  S32

S1 = 0
S2 = 1  S33

S1 = 0
S2 = 0  S34

| First state | Second state | Maintain previouis state |

Compare state of previous cycle and state of current cycle — S35

S36
First state <-> seecond state    No

Yes

S37
Change state time < $t_{th}$    No

Yes

Recognize operation start and perform locker transfe — S38

End

## INTERNATIONAL SEARCH REPORT

International application No.

**PCT/KR2024/005741**

### A. CLASSIFICATION OF SUBJECT MATTER

**E03C 1/266**(2006.01)i; **B09B 3/60**(2022.01)i; **B09B 3/38**(2022.01)i; **B09B 101/70**(2022.01)i

According to International Patent Classification (IPC) or to both national classification and IPC

### B. FIELDS SEARCHED

Minimum documentation searched (classification system followed by classification symbols)

E03C 1/266(2006.01); A61L 11/00(2006.01); B02C 18/00(2006.01); B02C 18/06(2006.01); B09B 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음식물 처리기(food waste disposer), 커버(cover), 자석(magnet), 센서(sensor), 제어 (control), 수분 분리기(moisture separator)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0045818 A (HUMMER CO., LTD.) 28 April 2017 (2017-04-28)<br>See paragraphs [0034]-[0051], [0061]-[0065], [0093]-[0097] and [0133] and figures 1-5 and 14-22. | 1,21 |
| Y | | 2-20 |
| Y | JP 2007-190499 A (MAX CO., LTD.) 02 August 2007 (2007-08-02)<br>See paragraphs [0015]-[0020], [0035]-[0048] and [0177] and figures 3-10 and 13. | 2-20 |
| Y | KR 10-2275826 B1 (SEINHOMESYS CO., LTD.) 09 July 2021 (2021-07-09)<br>See paragraphs [0053]-[0059] and figures 7-8. | 18-19 |
| A | KR 10-1998-0042725 A (KIM, Chang Hyun et al.) 17 August 1998 (1998-08-17)<br>See paragraphs [0044]-[0045] and figure 12. | 1-21 |
| A | JP 2007-061692 A (INAX CORP. et al.) 15 March 2007 (2007-03-15)<br>See paragraphs [0038]-[0043] and figures 1-3. | 1-21 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 August 2024** | **27 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/005741**

| Patent document cited in search report | | | Publication date (day/month/year) | Patent family member(s) | | | Publication date (day/month/year) |
|---|---|---|---|---|---|---|---|
| KR | 10-2017-0045818 | A | 28 April 2017 | JP | 2016-107264 | A | 20 June 2016 |
| | | | | JP | 6169672 | B2 | 26 July 2017 |
| | | | | KR | 10-1680127 | B1 | 28 November 2016 |
| | | | | KR | 10-1680129 | B1 | 28 November 2016 |
| | | | | KR | 10-1835559 | B1 | 07 March 2018 |
| | | | | KR | 10-1865860 | B1 | 11 June 2018 |
| | | | | KR | 10-1925392 | B1 | 05 December 2018 |
| | | | | KR | 10-2017-0046094 | A | 28 April 2017 |
| | | | | KR | 10-2018-0014131 | A | 07 February 2018 |
| | | | | WO | 2017-069539 | A1 | 27 April 2017 |
| JP | 2007-190499 | A | 02 August 2007 | None | | | |
| KR | 10-2275826 | B1 | 09 July 2021 | None | | | |
| KR | 10-1998-0042725 | A | 17 August 1998 | None | | | |
| JP | 2007-061692 | A | 15 March 2007 | None | | | |

Form PCT/ISA/210 (patent family annex) (July 2022)

**REFERENCES CITED IN THE DESCRIPTION**

**Patent documents cited in the description**

- WO 2012121539 A2

- WO 2016088939 A1